(19) Europäisches Patentamt / European Patent Office / Office européen des brevets

(11) **EP 4 668 982 A1**

(12) **EUROPEAN PATENT APPLICATION**
published in accordance with Art. 153(4) EPC

(43) Date of publication:
**24.12.2025 Bulletin 2025/52**

(21) Application number: **24757214.2**

(22) Date of filing: **14.02.2024**

(51) International Patent Classification (IPC):
**H04W 72/232** (2023.01)   **H04B 7/06** (2006.01)
**H04B 7/155** (2006.01)   **H04W 72/04** (2023.01)
**H04L 27/26** (2006.01)   **H04W 84/04** (2009.01)
**H04W 16/28** (2009.01)

(52) Cooperative Patent Classification (CPC):
**H04B 7/06; H04B 7/155; H04L 27/26; H04W 16/28; H04W 72/04; H04W 72/232; H04W 84/04**

(86) International application number:
**PCT/KR2024/002103**

(87) International publication number:
**WO 2024/172492 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.02.2023 KR 20230019584**
**12.05.2023 KR 20230061782**
**08.08.2023 KR 20230103559**

(71) Applicant: **LG Electronics Inc.**
**Yeongdeungpo-gu**
**Seoul 07336 (KR)**

(72) Inventors:
• **SHIM, Jaenam**
**Seoul 06772 (KR)**
• **YOU, Hyangsun**
**Seoul 06772 (KR)**
• **KO, Hyunsoo**
**Seoul 06772 (KR)**

(74) Representative: **Plasseraud IP**
**104 Rue de Richelieu**
**CS92104**
**75080 Paris Cedex 02 (FR)**

(54) **SIGNAL TRANSMISSION AND RECEPTION METHOD FOR WIRELESS COMMUNICATION, AND DEVICE THEREFOR**

(57)    A device in which a control link with a base station, and an access link with a terminal are established in a wireless communication system, according to various embodiments, can receive, through the control link, a downlink control indicator (DCI) including a plurality of time resource fields, a plurality of beam indication fields and a validity field for configuring a beam of the access link, specify a valid first time resource field from among the plurality of time resource fields on the basis of the validity field, and determine a beam for the access link on the basis of a first beam indication field corresponding to the first time resource fields from among the plurality of beam indication fields.

FIG. 12

EP 4 668 982 A1

Description

## TECHNICAL FIELD

The present disclosure relates to wireless communication, and more particularly, to a method of transmitting or receiving an uplink/downlink signal in a wireless communication system and apparatus therefor.

## BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

## DISCLOSURE

## TECHNICAL PROBLEM

The object of the present disclosure is to provide a method of transmitting and receiving signals more accurately and efficiently.

The objects of present disclosure are not limited to what has been particularly described hereinabove, and other objects that the present disclosure could achieve will be more clearly understood from the following detailed description.

## TECHNICAL SOLUTION

In an aspect of the present disclosure, provided herein is a method of performing communication by a device having a control link established with a base station (BS) and an access link established with a user equipment (UE) in a wireless communication system. The method includes: receiving downlink control information (DCI) via the control link, wherein the DCI includes a validity field, a plurality of beam indication fields, and a plurality of time resource fields for configuring a beam of the access link; identifying first time resource fields determined to be valid among the plurality of time resource fields based on the validity field; and determining the beam of the access link based on first beam indication fields corresponding to the first time resource fields among the plurality of beam indication fields.

Alternatively, the validity field may include indication information on a number of invalid time resource fields among the plurality of time resource fields.

Alternatively, the validity field may include indication information on a number of valid time resource fields among the plurality of time resource fields.

Alternatively, a numbers of the plurality of beam indication fields and a number of the plurality of time resource fields may be determined based on a maximum number of beams that the BS is capable of indicating through the DCI.

Alternatively, the device may transmit and receive signals to and from the UE via the access link only on time resources corresponding to the first time resource fields among the plurality of time resource fields.

Alternatively, the device may turn off an operation of transmitting and receiving signals via the access link on time resources corresponding to remaining time resource fields excluding the first time resource fields among the plurality of time resource fields.

Alternatively, the method may further include receiving configuration information on a size of the validity field and a number of invalid time resource fields corresponding to each bit value included in the validity field via radio resource control (RRC) signaling.

Alternatively, the method may further include: receiving first configuration information for configuring a size of the validity field and a number of invalid time resource fields corresponding to several bits values among bit values included in the validity field via RRC signaling; and receiving second configuration information for configuring a number of invalid time resource fields corresponding to remaining bit values except for the several bit values among the bit values included in the validity field via a medium access control (MAC) control element (CE).

Alternatively, the device may be a network-controlled repeater (NCR).

In another aspect of the present disclosure, provided herein is a non-transitory computer-readable storage medium storing instructions for performing the above-described method of performing communication by a device.

In another aspect of the present disclosure, provided herein is a device configured to perform the above-described method of performing communication.

In another aspect of the present disclosure, provided herein is a processing device configured to control the device performing communication.

In another aspect of the present disclosure, provided herein is a method of configuring, by a BS, a beam of an access link for a device in a wireless communication system. The method includes transmitting DCI via a control link established between the device and the BS, wherein the DCI includes a validity field, a plurality of beam indication fields, and a plurality of time resource fields for configuring the beam of the access link established between the device and a UE. A plurality of first beam indication fields that are valid among the plurality of beam indication fields may be identified based on the validity field indicating first time resource fields that are invalid among the plurality of time resource fields.

In another aspect of the present disclosure, provided herein is a non-transitory computer-readable storage medium storing instructions for performing the method of configuring a beam for an access link for a device.

In a further aspect of the present disclosure, provided herein is a BS configured to configure a beam for an access link for a device.

## ADVANTAGEOUS EFFECTS

According to an embodiment of the present disclosure, signal transmission and reception can be performed more accurately and efficiently in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

## BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.

FIG. 1 illustrates the structure of an LTE system to which embodiment(s) are applicable.

FIG. 2 illustrates the structure of an NR system to which embodiment(s) are applicable.

FIG. 3 illustrates the structure of an NR radio frame to which embodiment(s) are applicable.

FIG. 4 illustrates the slot structure of an NR frame to which embodiment(s) are applicable.

FIG. 5 illustrates an example of mapping physical channels in a slot.

FIG. 6 illustrates an exemplary PDCCH transmission/reception process.

FIGS. 7 and 8 are diagrams illustrating examples of synchronization signal (SS) block transmission and physical random access channel (PRACH) resources linked to SS blocks according to various embodiments.

FIG. 9 schematically illustrates an example of a parent link and a child link.

FIG. 10 is a diagram illustrating an example of topology in which a network-controlled repeater (NCR) performs transmission and reception between the gNB and the UE.

FIG. 11 is a diagram illustrating a radio frequency (RF) repeater and an NCR.

FIGS. 12 and 13 are diagrams for illustrating downlink control information (DCI) for an aperiodic (dynamic) indication of an access link beam.

FIG. 14 is a diagram for explaining DCI that further includes a validity indication field.

FIG. 15 is a diagram for explaining a method of determining a beam for an access link established with a user equipment (UE).

FIG. 16 is a diagram for explaining a method of configuring a beam for an access link of a device.

FIG. 17 illustrates a communication system applied to the present disclosure.

FIG. 18 illustrates wireless devices applicable to the present disclosure.

FIG. 19 illustrates another example of a wireless device to which the present disclosure is applied.

## DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

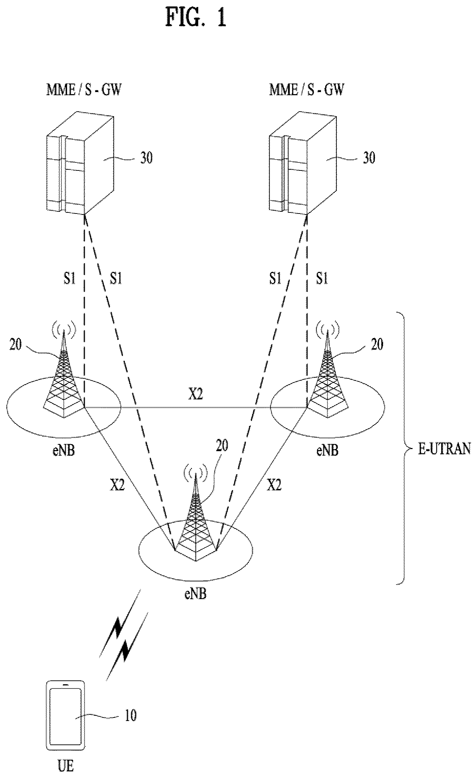

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user UE (UT), subscriber station (SS), mobile UE (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC 39) via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

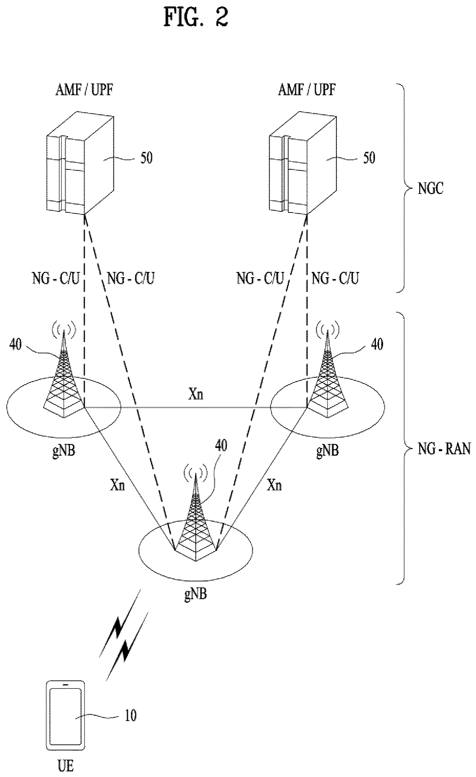

FIG. 2 illustrates the structure of a NR system to which the present disclosure is applicable.

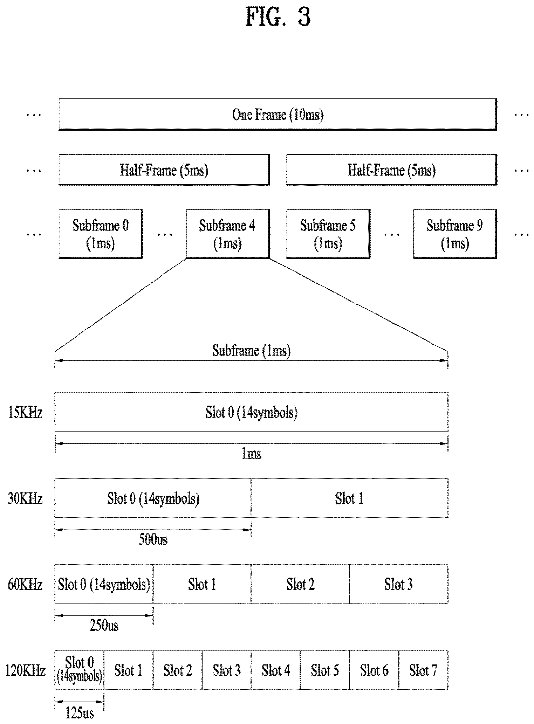

Referring to FIG. 2, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
| --- | --- | --- |
| FR1 | 410MHz - 7125MHz | 15, 30, 60kHz |
| FR2 | 24250MHz - 52600MHz | 60, 120, 240kHz |

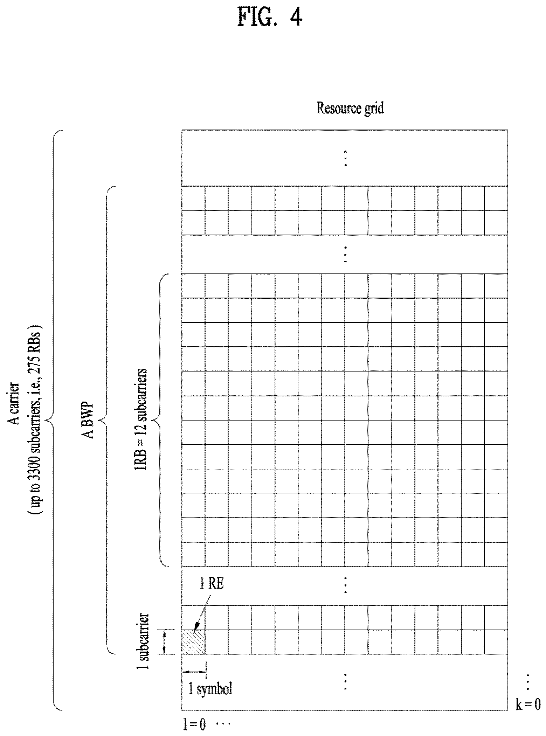

FIG. 4 illustrates the slot structure of a NR frame to which the present disclosure is applicable.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

## Bandwidth part (BWP)

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, mMTC, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., sub-carrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signalling, etc.). The BS may instruct the UE to switch to another configured DL/UL BWP (through L1 signaling, MAC CE or RRC signalling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is set up. A DL/UL BWP assumed by the UE in this situation is defined as an initial active DL/UL BWP.

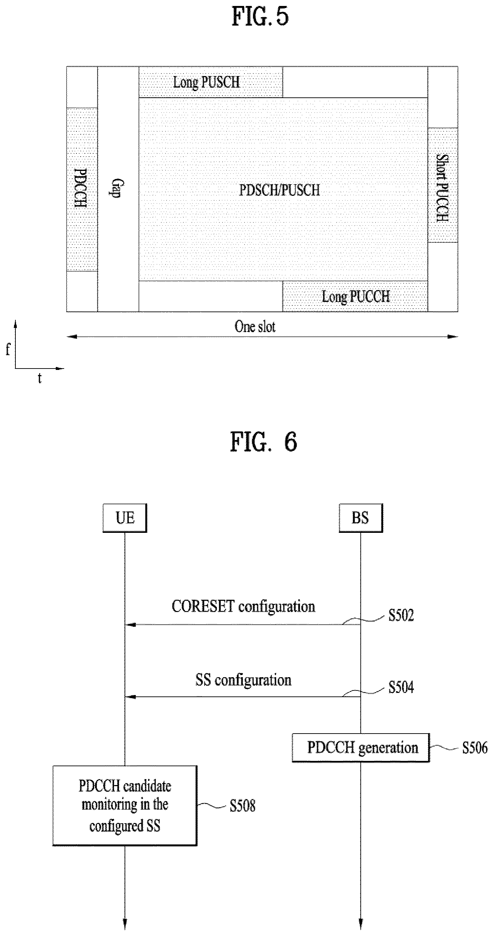

FIG. 5 illustrates an example of mapping physical channels in a slot.

A slot may include a DL control channel, DL or UL data, a UL control channel, etc., all of which are included. For example, the first N symbols in a slot may be used to transmit a DL control channel (hereinafter, referred to as a DL control region), and the last M symbols in the slot may be used to transmit a UL control channel (hereinafter, referred to as a UL control region). N and M are each integers greater than or equal to 0. A resource region (hereinafter, referred to as a data region) between the DL control region and the UL control region may be used for DL data transmission or UL data transmission. A time gap for DL-to-UL or UL-to-DL switching may exist between the control region and the data region. A PDCCH may be transmitted in the DL control region, and a PDSCH may be transmitted in the DL data region. Some symbols at the time of switching from DL to UL in a slot may be used as a time gap.

In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 6 illustrates an exemplary PDCCH transmission/reception process.

Referring to FIG. 6, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. System information (SIB1) broadcast in a cell includes cell-specific PDSCH configuration information, PDSCH-ConfigCommon. PDSCH-ConfigCommon includes a list (or look-up table) of parameters related to a time-domain resource allocation, pdsch-TimeDomainAllocationList. Each pdsch-TimeDomainAllocationList may include up to 16 entries (or rows) each being joint-encoded {K0, PDSCH mapping type, PDSCH start symbol and length (SLIV)}. Aside from (additionally to) pdsch-TimeDomainAllocationList configured through PDSCH-ConfigCommon, pdsch-TimeDomainAllocationList may be provided through a UE-specific PDSCH configuration, PDSCH-Config. pdsch-TimeDomainAllocationList configured UE-specifically has the same structure as pdsch-TimeDomainAllocationList provided UE-commonly. For K0 and an SLIV of pdsch-TimeDomainAllocationList, the following description is referred to.

Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/fields.

- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS."

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.

- searchSpaceId: Indicates the ID of an SS.
- controlResourceSetId: Indicates a CORESET associated with the SS.
- monitoringSlotPeriodicityAndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 5 shows the characteristics of each SS.

[Table 5]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 6 shows DCI formats transmitted on the PDCCH.

[Table 6]

| DCI format | Usage |
|---|---|
| 0_0 | Scheduling of PUSCH in one cell |

(continued)

| DCI format | Usage |
|---|---|
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.

- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

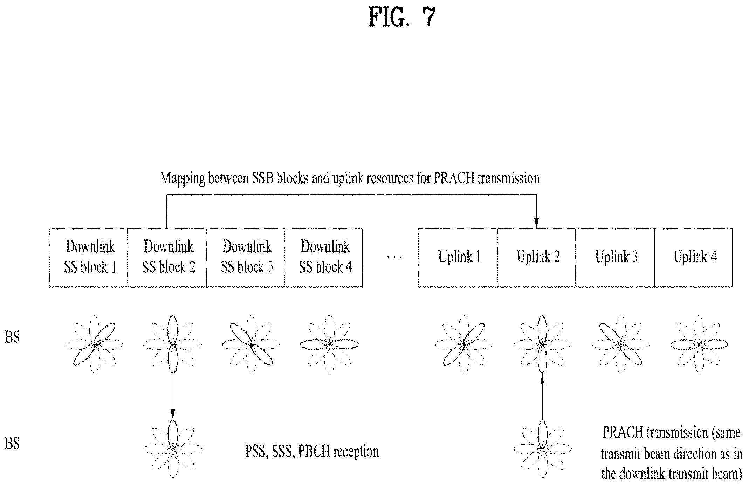

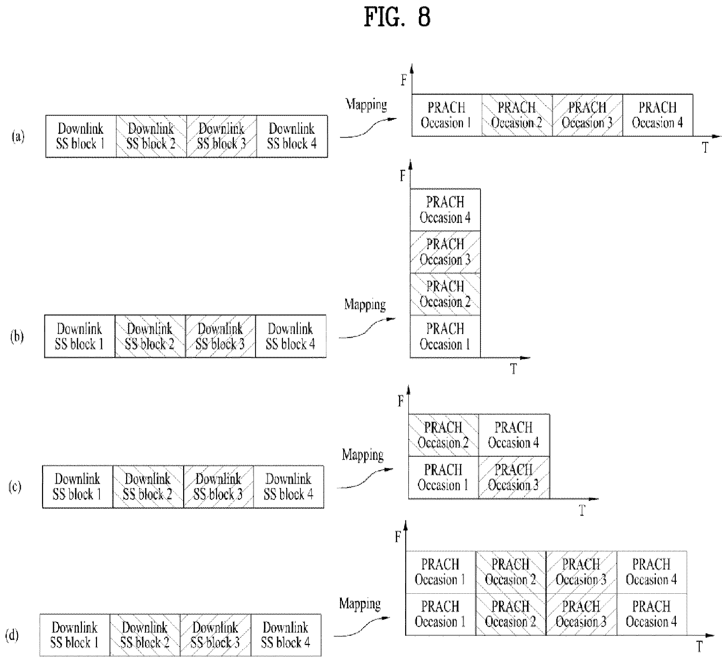

FIGS. 7 and 8 are diagrams illustrating examples of SS block transmission and PRACH resources linked to SS blocks according to various embodiments.

To communicate with a single UE, the BS needs to determine the optimal beam direction between the BS and the UE. Since the optimal beam direction will change as the UE moves, the BS needs to continuously track the optimal beam direction. A process of determining the optimal beam direction between the BS and the UE is called a beam acquisition process, and a process of continuously tracking the optimal beam direction is called a beam tracking process. The beam acquisition process is required in the following cases: 1) initial access in which the UE attempts to connect to the BS for the first time; 2) handover in which the UE moves from one BS to another BS; and 3) beam recovery to recover from beam failure, that is, a state in which the optimal beam is lost during beam tracking for finding the optimal beam between the UE and the BS, and as a result, optimal communication with the BS is not maintained continuously or communication becomes impossible

In the NR system, a multi-stage beam acquisition process is being discussed for beam acquisition in an environment using multiple beams. In the multi-stage beam acquisition process, in the initial access stage, the BS and UE perform connection setup using wide beams, and after the connection setup is completed, the BS and UE perform communication with optimal quality using narrow beams. An example of the beam acquisition process in the NR system applicable to various embodiments may be as follows.

- 1) In the initial access stage, the BS transmits synchronization blocks for each wide beam such that the UE is capable of finding the BS, i.e., performing cell search or cell acquisition, and measuring the channel quality of each wide beam to find the optimal wide beam to be used in the first stage of beam acquisition.

- 2) The UE performs cell search on synchronization blocks for each beam and performs downlink beam acquisition using the detection results for each beam.
- 3) The UE performs a RACH procedure to inform the BS which the UE finds that the UE intends to access.
- 4) In order for the UE to inform the BS of the downlink beam acquisition result (e.g., beam index) at the wide beam level simultaneously with the RACH procedure, the BS links or associates the synchronization blocks transmitted per beam with PRACH resources to be used for PRACH transmission. When the UE performs the RACH procedure using a PRACH resource associated with the optimal beam direction the UE finds, the BS obtains information about an appropriate downlink beam for the UE in the process of receiving a PRACH preamble.

In a multi-beam environment, it is important whether the UE and a transmission and reception point (TRP) are capable of accurately determining transmission (TX) beam and/or reception (RX) beam directions between the UE and the TRP. In the multi-beam environment, depending on the TX/RX reciprocal capability of the TRP (e.g., BS) or UE, repeated signal transmission or beam sweeping for signal reception may be considered. The TX/RX reciprocal capability is also referred to as TX/RX beam correspondence at the TRP and the UE. If the TX/RX reciprocal capability at the TRP and UE does not hold (is not valid) in the multi-beam environment, the UE may not be able to transmit a UL signal in a beam direction in which the UE receives a downlink signal. This is because the optimal path for UL and the optimal path for DL may differ. The TX/RX beam correspondence at the TRP is valid (holds) if the TRP is capable of determining a TRP RX beam for uplink reception based on the downlink measurement of the UE on one or more TRP TX beams, and/or if the TRP is capable of determining a TRP TX beam for downlink transmission based on the uplink measurement of the TRP on one or more TRP RX beams. The TX/RX beam correspondence at the UE is valid (holds) if the UE is capable of determining a UE RX beam for uplink transmission based on the downlink measurement of the UE on one or more UE RX beams, and/or if the UE is capable of determining a UE TX beam for downlink reception based on the indication of the TRP, which is based on uplink measurement on one or more UE TX beams.

In downlink, the BS may dynamically allocate resources for downlink transmission to the UE through PDCCH(s) (including DCI format 1_0 or DCI format 1_1). In addition, the BS may inform a specific UE through PDCCH(s) (including DCI format 2_1), that some of the pre-scheduled resources are pre-empted for signal transmission to another UE. Furthermore, based on a semi-persistent scheduling (SPS) method, the BS may configure the period of downlink assignments through higher layer signaling and provide a downlink assignment for initial HARQ transmission to the UE by signaling activation or deactivation of the configured downlink assignments via a PDCCH. In this case, if retransmission for the initial HARQ transmission is needed, the BS explicitly schedules retransmission resources through the PDCCH. If a downlink assignment through DCI and a downlink assignment based on SPS conflict, the UE may prioritize the downlink assignment through DCI.

Similar to downlink, in uplink, the BS may dynamically allocate resources for uplink transmission to the UE through PDCCH(s) (including DCI format 0_0 or DCI format 0_1). In addition, based on a configured grant method (similar to SPS), the BS may allocate uplink resources for initial HARQ transmission to the UE. In dynamic scheduling, a PDCCH accompanies PUSCH transmission, but in the case of a configured grant, the PUSCH transmission is not accompanied by the PDCCH. However, uplink resources for retransmission are explicitly allocated through the PDCCH(s). That is, an operation in which uplink resources are preconfigured by the BS without a dynamic grant (e.g., uplink grant through scheduling DCI) is referred to as a configured grant. The configured grant is defined in the following two types.

- Type 1: An uplink grant with a certain period is provided by higher layer signaling (configured without separate Layer 1 signaling)
- Type 2: The period of an uplink grant is configured by higher layer signaling, and the uplink grant is provided by signaling activation/deactivation of the configured grant through a PDCCH.

## IAB (Integrated Access / Backhaul)

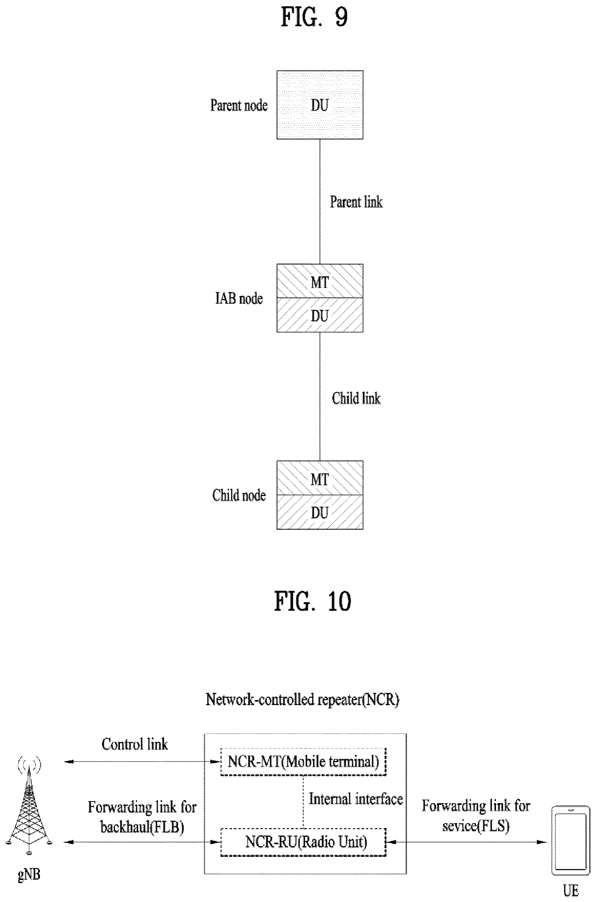

An example of a network with such integrated access and backhaul links is shown in FIG. 9, where an IAB node or relay node (rTRP) can multiplex access and backhaul links in time, frequency, or space (e.g., beam-based operations).

The operations of different links may be at the same or different frequencies (also referred to as 'in-band' and 'out-band' relays). Efficient support of an out-band relay is important in some NR deployment scenarios, but it is very important to understand in-band operational requirements, which mean close interaction with an access link operating at the same frequency, to accept duplex constraints and avoid/mitigate interference.

In addition, operating an NR system in the mmWave spectrum may present several unique challenges, including experiencing severe short-term blocking that may not be easily mitigated by current RRC-based handover mechanisms due to the larger time scale required to complete a procedure in comparison to short-term blocking.

To overcome short-term blocking in mmWave systems, it may require a fast RAN-based mechanism (which does not necessarily require intervention of a core network) for inter-rTRP switching.

The need to mitigate short-term blocking of an NR operation in mmWave spectrum with the need for easier deployment of a self-backhauled NR cell may lead to the need for the development of an integrated framework that enables fast switching of access and backhaul links.

In addition, Over-The-Air (OTA) coordination between rTRPs may be considered as mitigating interference and supporting end-to-end route selection and optimization.

The following requirements and aspects may need to be resolved by an integrated access and wireless backhaul (IAB) for NR.

- Efficient and flexible operation for in-band and out-band broadcasting in indoor and outdoor scenarios
- Multi-hop and redundant connections
- End-to-end route selection and optimization
- Backhaul link support with high spectrum efficiency
- Legacy NR UE support

Legacy NR (new RAT) is designed to support half-duplex devices. In addition, half duplex of an IAB scenario is supported and worthy of being targeted. Furthermore, a full duplex IAB device may be studied.

In the IAB scenario, if each IAB node or Relay Node (RN) does not have scheduling capability, a Donor gNB (DgNB) must schedule the entire links among DgNB-related RNs and UEs. In other words, the DgNB may collect traffic information from all related RNs, make scheduling decisions for all links, and then inform each RN of schedule information.

FIG. 9 schematically illustrates an example of a parent link and a child link.

As shown in FIG. 9, a link between an IAB node and a parent node is called a parent link, and a link between an IAB node and a child node/UE is called a child link. That is, a link between MT and parent DU is called a parent link, and a link between DU and child MT/UE is called a child link.

Yet, depending on interpretation or perspective, a link between an IAB node and a parent node may be called a backhaul link, and a link between an IAB node and a child node/UE may be called an access link.

An IAB node may receive a slot format configuration for communication with a parent node and a slot format configuration for communication with a child node/access UE.

In the existing IAB node, a time division multiplexing (TDM) operation in which a DU and an MT operate through different time resources has been performed. On the other hand, resource multiplexing such as SDM/FDM, FC, etc. between the DU and the MT is required for efficient resource operation. As shown in FIG. 10, a link between the IAB node (IAB MT) and the parent node is referred to as a parent link, and a link between the IAB node (IAB DU) and the child node (child MT) is referred to as a child link. At this time, the TDM operation between the parent link and the child link has been discussed, and the SDM/FDM and FD operations are being discussed.

The DU and the MT existing in the same IAB node (or co-located) cannot operate simultaneously due to intra-node interference, slot/symbol boundary misalignment, power sharing, etc., and can operate in TDM. On the other hand, multiplexing of SDM/FDM may be used between the DU and the MT. Such multiplexing is applicable to an example case in which, since DU and MT use different panels, there is little interference between the panels. In this case, DU and MT existing (or co-located) in the same IAB node can transmit or receive data or information simultaneously, but it is impossible for each of the DU and the MT to perform transmission and reception simultaneously or to perform reception and transmission simultaneously.

Alternatively, FD may be used between the DU and the MT. This is applicable in cases where there is little interference between the DU and the MT, such as when a frequency domain where the DU operates and a frequency domain where the MT operates are far apart. In this case, the DU and the MT existing in the same IAB node (or co-located) can freely transmit and receive data simultaneously. The DU and the MT can transmit or receive data simultaneously, and it is also possible for each of the DU and the MT to perform transmission and reception simultaneously or to perform reception and transmission simultaneously.

N MT-CCs and M DU-cells may exist in the IAB node. FIG. 10 shows an example where the IAB node is composed of three MT-CCs (where N=3) and three DU-cells (where M=3). MT-CCs existing in the IAB node may operate through the same or different frequency resources, and one MT-CC may be connected to one or more parent DU-cells. DU-cells existing in the IAB node may operate through the same or different frequency resources.

For a specific MT-CC/DU-cell pair within the IAB node, the MT-CC and the DU-cell may be in either TDM relationship or no-TDM relationship for the following four Tx/Rx direction combinations, and TDM or no-TDM may vary for each Tx/Rx combination.

- DU-Tx / MT-Tx
- DU-Rx / MT-Rx
- DU-Tx / MT-Rx
- DU-Rx / MT-Tx

For example, for a specific MT-CC/DU-cell pair, all of the four Tx/Rx combinations can operate with TDM. In this case, the corresponding DU-cell and the corresponding MT-CC should always operate with TDM regardless of Tx/Rx directions of the DU-cell and the MT-CC. In another example, for a specific MT-CC/DU-cell pair, all of the four Tx/Rx combinations can operate with no-TDM. In this case, the corresponding DU-cell and MT-CC can always operate simultaneously with no-TDM regardless of the Tx/Rx directions of the DU-cell and MT-CC. In another example, for a specific MT-CC/DU-cell pair, DU-Tx/MT-Tx and DU-Rx/MT-Rx can operate with no-TDM, and DU-Tx/MT-Rx and DU-Rx/MT-Tx can operate with TDM. The above-described operation relates to a method (e.g., SDM/FDM) for allowing simultaneous operation when the Tx/Rx directions of the DU-cell and the MT-CC are the same, and this method can operate simultaneously when the Tx/Rx directions of the DU-cell and the MT-CC are the same. TDM/no-TDM information for each Tx/Rx combination can be configured/determined differently or independently for each specific MT-CC/DU-cell pair within the IAB node.

At this time, the IAB MT may be connected to two parent DUs using, for example, a dual-connectivity method or a DAPS-HO method.

### Network-controlled repeater (NCR) in NR

Coverage is a fundamental aspect of cellular network deployments. Mobile operators rely on different types of network nodes to offer blanket coverage in their deployments. Deployment of regular full-stack cells is one option but it may not always be possible (e.g., no availability of backhaul) or economically viable. As a result, new types of network nodes have been considered to increase mobile operators' flexibility for their network deployments. For example, Integrated Access and Backhaul (IAB) was introduced in Rel-16 and enhanced in Rel-17 as a new type of network node not requiring a wired backhaul. Another type of network node is the RF repeater which simply amplify-and-forward any signal that they receive. RF repeaters have seen a wide range of deployments in 2G, 3G and 4G to supplement the coverage provided by regular full-stack cells. In Rel-17, RAN4 specified RF and EMC requirements for such RF repeaters for NR targeting both FR1 and FR2. While an RF repeater presents a cost effective means of extending network coverage, it has its limitations. An RF repeater simply does an amplify-and-forward operation without being able to take into account various factors that could improve performance. Such factors may include information on semi-static and/or dynamic downlink/uplink configuration, adaptive transmitter/receiver spatial beamforming, ON-OFF status, etc.

A network-controlled repeater is an enhancement over conventional RF repeaters with the capability to receive and process side control information from the network. Side control information could allow a network-controlled repeater to perform its amplify-and-forward operation in a more efficient manner. Potential benefits could include mitigation of unnecessary noise amplification, transmissions and receptions with better spatial directivity, and simplified network integration.

FIG. 10 is a diagram illustrating an example of topology in which a network-controlled repeater (NCR) performs transmission and reception between the gNB and the UE.

Referring to FIG. 10, the NCR may include a radio unit (RU) and a mobile terminal (MT).

The gNB may include a central unit (CU) and/or a distributed unit (DU), and the NCR may be connected to the gNB. In the NCR, the MT may form a control link with the gNB, and the RU may form a forwarding link for backhaul with the gNB and a forwarding link for access with the UE.

The RU of the NCR may be composed of only an RF layer. The RU may receive a signal transmitted by the gNB through the forwarding link at the RF end and may forward the received signal to the UE. As a result, the signal received from the UE may be received by the RF end, and the received signal may be forwarded to the gNB. The RU may only transmit signals between the gNB and the UE, and may not generate signals/channels by itself and transmit the generated signals/channels to the gNB/UE. Alternatively, the RU receives signals/channels from the gNB/UE, but does not detect the received signals/channels. In order to forward the received signal, the RU may control the directions of the Tx/Rx beams, the DL/UL directions, ON/OFF information, transmission (Tx) power, etc. in the RF end. However, this RU operation cannot be determined by the NCR itself, and can be entirely controlled by the gNB.

The MT of the above NCR may include an RF layer and L1, L2, and/or L3 layers. For example, the MT may include only an RF layer and an L1 layer or may include the L1 and L2 layers. Alternatively, the MT may include an RF layer and L1/L2/L3 layers. The MT may detect/receive a signal/channel transmitted by the gNB and may generate a signal/channel to be transmitted to the gNB. In addition, the MT may receive information (e.g., side control information) necessary to control the operation of the RU from the gNB. Meanwhile, the MT may not perform transmission and reception with the UE.

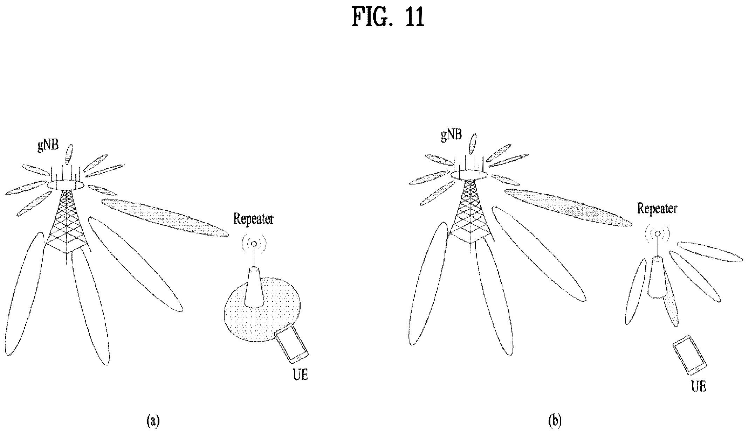

FIG. 11 is a diagram illustrating the radio frequency (RF) repeater and the NCR.

Referring to FIG. 11(a), the existing RF repeater may perform beamforming to which an omni-direction or fixed direction is applied. In contrast, referring to FIG. 11(b), the NCR can adaptively adjust the transmission/reception beam directions of the NCR according to the UE position and the channel condition of the UE, thereby obtaining a beamforming gain.

In addition, in the case of the existing RF repeater, since the DL/UL directions are not distinguished from each other in the TDD system, transmission and reception in the DL and UL directions are always performed simultaneously. Alternatively, only the fixed TDD configuration is applied to the existing RF repeater, so that switching between the DL direction and UL direction has been performed using a fixed time pattern. In contrast, the NCR may perform DL/UL switching in consideration of a TDD configuration. Through this, switching is being considered. As a result, the NCR can enable adaptive DL/UL operation, may minimize power consumption caused by forwarding unnecessary signals, and may also minimize interference.

In addition, in the case of the existing RF repeater, the power of a signal that is received regardless of whether the gNB and the UE transmit signals is always amplified and transmitted. As a result, unnecessary power consumption and interference to the surroundings are unavoidably increased. In contrast, the NCR performs ON/OFF operations, and when there is no signal to be transmitted to the gNB and UE, the operation of the RU is turned off, so that unnecessary signals are not transmitted.

In addition, in the case of existing RF repeaters, power of a signal received at a fixed ratio is amplified and transmitted. When a signal is transmitted with unnecessarily large power, interference affecting the surroundings may decrease by reducing transmission (Tx) power of the NCR. When a signal is transmitted with low power, transmission (Tx) power of the NCR is increased so that the signal can be stably transmitted to the receiver.

In addition, the existing RF repeater has been operated without recognizing a DL/UL slot boundary. On the other hand, in order for the NCR to adaptively adjust beamforming, ON/OFF, DL/UL directions, transmission power, etc. as described above, the NCR must know transmission/reception (Tx/Rx) boundaries of a downlink (DL). As a result, the RU operation can be applied differently for each unit time (e.g., slot/symbol).

## Side control information for NCR

Hereinafter, the operation in the NCR will be assumed for convenience of description. However, the content described below can be applied to devices other than the NCR. In particular, the content described below can be applied for the operation of RIS. To this end, the NCR mentioned in the present disclosure can be replaced with 'RIS' and expanded/interpreted. In this case, the RU may serve to forward signals from the gNB to the UE in RIS and to forward signals from the UE to the gNB in RIS, and the MT may serve to receive side control information required for controlling signal transmission of the RU from the gNB. Meanwhile, the term "network" may hereinafter be interpreted as "gNB" or "CU/DU." In addition, the term "gNB" may hereinafter be interpreted as "network," "CU," or "DU."

In order for the NCR to forward the signal received by the RU, it may be considered that the directions of transmission/reception (Tx/Rx) beams, DL/UL directions, ON/OFF states, transmission (Tx) power, etc. are adjusted at the RF end. However, the RU operation cannot be determined by the NCR itself, and may be entirely controlled by the gNB. To this end, the MT may receive information (i.e., side control information) necessary to control the RU operation from the gNB. This side control information may be transmitted through L1/L2 signaling such as MAC-CE and DCI.

The above-described side control information may include all or part of the following information.

- Beamforming information: Information on the transmission/reception (Tx/Rx) beam direction of the RU

Here, beamforming information may include a beam direction for UL transmission to the gNB, a beam direction for DL reception from the gNB, a beam direction for DL transmission to the UE, and/or a beam direction for UL reception from the UE.

- Timing information to align transmission/reception boundaries of network-controlled repeater (NCR): Information for the RU to align transmission/reception (Tx/Rx) slots symbol boundaries
- Information on UL-DL TDD configuration: information on DL/UL directions of the RU
- ON-OFF information for efficient interference management and improved energy efficiency: Information on ON-OFF operations of the RU
- Power control information for efficient interference management: Information on transmission (Tx) power of the RU, and such information may include UL transmission (Tx) power to the gNB and/or DL transmission (Tx) power to the UE.

Such side control information may be applied differently for each time resource. In this case, it is necessary to indicate different side control information for each time resource.

As described above, when side control information is transmitted via a MAC-CE and/or DCI, the side control information may be transmitted through a different MAC-CE and/or DCI for each time resource unit. In this case, there is a burden that the side control information should be transmitted for each time resource unit. Accordingly, when the side control information is transmitted once, it may be considered to indicate the side control information for a plurality of time resource units. In such a case, there is a disadvantage in that the side control information for the plurality of time resource units needs to be determined/configured in advance, but there is an advantage of enabling efficient signaling.

To indicate beam information applied to the access link of an NCR-Forward (NCR-Fwd), a periodic (or semi-static) beam configuration, a semi-persistent beam configuration, and an aperiodic (dynamic) beam indication may be applied or considered.

(1) Periodic beam configuration

A periodic beam configuration for an access link is performed through RRC signaling. An NCR-Mobile Termination (NCR-MT) may receive/configure one or more periodic beam configurations for the beam information of the access link of the NCR-Fwd (through side control information).

- Each periodic beam configuration consists of X forwarding resources. In this case, X may have a range of $1 \leq X \leq X\_max$.
- Each forwarding resource consists of {beam index, time resource}. In a time resource indicated as the time resource of the forwarding resource, a beam indicated by the beam index of the corresponding forwarding resource is applied to the access link.
- Each time resource is defined by at least {starting slot defined as the slot offset in one period, starting symbol defined by the symbol offset within the slot, duration defined by the number of symbols} . In this case, within each period, consecutive symbols from the starting symbol in the starting slot for the duration constitute the time resource.
- Period information may be indicated together with the periodic beam configuration, and the period value may be commonly applied to the X forwarding resources within the periodic beam configuration.
- Reference subcarrier spacing (SCS) information may be indicated together with the periodic beam configuration, and the reference SCS value may be commonly applied to the X forwarding resources within the periodic beam configuration.

(2) Semi-persistent configuration

A semi-persistent beam configuration for an access link is performed through RRC signaling. The NCR-MT may receive one or more semi-persistent beam configurations for the beam information of the access link of the NCR-Fwd.

- Each semi-persistent beam configuration consists of Z forwarding resources. In this case, Z may have a range of $1 \leq Z \leq Z\_max$.
- Each forwarding resource may consist of {beam index, time resource}. In a time resource indicated as the time resource of the forwarding resource, a beam indicated by the beam index of the corresponding forwarding resource may be applied to the access link.
- Each time resource may be defined by at least one {starting slot defined as the slot offset in one period, starting symbol defined by the symbol offset within the slot, duration defined by the number of symbols} . In this case, within each period, consecutive symbols from the starting symbol in the starting slot for the duration may constitute the time resource.
- Period information may be indicated together with the semi-persistent beam configuration, and the period value may be commonly applied to the Z forwarding resources within the semi-persistent beam configuration. Alternatively, an independent period value may be configured and applied for each forwarding resource within the semi-persistent beam configuration.
- Reference SCS information may be indicated together with the semi-persistent beam configuration, and the reference SCS value may be commonly applied to the Z forwarding resources within the semi-persistent beam configuration. Alternatively, an independent reference SCS value may be configured and applied for each forwarding resource within the semi-persistent beam configuration.

When one or more semi-persistent beam configurations are configured for the access link, these semi-persistent beam configurations may be activated or deactivated through signaling such as a MAC-CE or DCI.

- Each semi-persistent beam configuration may be activated or deactivated on a per-configuration basis. Alternatively, the indices of semi-persistent beam configurations to be activated (or deactivated) may be indicated. For example, among multiple semi-persistent beam configurations, only a semi-persistent beam configuration corresponding to the index of an indicated semi-persistent beam configuration may be activated.
- One or more forwarding resources within the semi-persistent beam configuration may be activated. The activation or deactivation may be indicated for each forwarding resource within the semi-persistent beam configuration. Alternatively, the indices of forwarding resources to be activated (or deactivated) may be indicated.

(3) Aperiodic (dynamic) beam indication

An aperiodic (dynamic) beam indication for the access link is performed through DCI. The NCR-MT may receive DCI containing side control information for the beam information of the access link of the NCR-Fwd. The NCR-MT may receive information on one or more beam indices to be applied to the access link of the NCR-Fwd through a single piece of DCI containing the side control information.

- The DCI containing the side control information includes Lmax beam indication fields. One beam indication field includes information on one beam index.
- The DCI containing the side control information may include at least one of the following fields.

    i) There are Lmax time resource fields. One time resource field may include information on one time resource.
    ii) Alternatively, there is one time resource field. The one time resource field includes information on Lmax time resources.
    iii) Information on Lmax beam indices and information on Lmax time resources have a one-to-one mapping relationship in order. That is, for the L-th time resource, the L-th beam index is applied to the access link ($0 \leq L \leq$ Lmax-1).

The periodic beam indication, semi-persistent indication, and aperiodic (dynamic) beam indication methods for indicating an access link beam described above have been agreed upon in relation to a certain scenario, and specifically, the related agreements are as follows.

[Table 7]

| Agreement 1 |
| --- |
| Following parameters should be supported to define the time resource: |
| - For a periodic and/or semi-persistent configured time resource, starting time, duration per beam(s) and periodicity is needed. |
| - For aperiodic indication of time resource, starting time and duration per beam(s) is needed. |
| - FFS: The SCS for starting time, duration, and periodicity |
| - FFS: How to define the duration, e.g., via the length of time resource or resource index(es) |
| - FFS: Whether indication of starting time can be implicit (e.g., the first slot after the time to apply the received beam indication and the first OFDM symbol in the slot) |
| Agreement2 |
| For each periodic beam indication for access link, one RRC signalling is used including the information defined by the following: |
| - A list of X ($1 \leq X \leq X\_max$) forwarding resource, each is defined as {Beam index, time resource} |
| - FFS: The value of X_max, other details |
| Each time resource is defined by {Starting slot defined as the slot offset in one period, starting symbol defined by symbol offset within the slot, duration defined by the number of symbols} with dedicated field. |
| - The periodicity is configured as part of the RRC signaling for periodic beam indication |
| -- The same periodicity is assumed for all time resource(s) in one periodic beam indication. |
| - The reference SCS is configured as part of the RRC signaling for periodic beam indication |
| -- The same reference SCS is assumed for all time resource(s) in one periodic beam indication. |
| Agreement3 |
| For each aperiodic beam indication for access link, one DCI is used with the information defined by |
| Option-1: |
| - L_max fields are used to indicate the beam information and each field refers to one beam index ; |
| -- Note: The bitwidth of this field is determined by the number of beams used for access link. |
| - T_max fields to indicate the time resource; |
| -- Note: A list of time resource is pre-defined by RRC signalling. The bitwidth of this field for time resource indication is determined by the length of list. |
| - FFS: The value of T_max |
| -- Down-select between T_max=1 or T_max=L_max. |
| - FFS: How to define the association between time indication and beam indication |

(continued)

> Each time resource is defined by {Starting slot defined as the slot offset, starting symbol defined by symbol offset within the slot, duration defined by the number of symbols} with dedicated field.

Hereinafter, methods of indicating aperiodic (dynamic) beam indication information for an access link while an NCR operates and operations of the NCR will be described based on the above discussion.

## Invalid aperiodic access link beam indication method

To indicate beam information applied to the access link of the NCR-Fwd, a periodic (or semi-static) beam configuration, semi-persistent beam configuration, or aperiodic (dynamic) beam indication may be applied. The NCR-MT receives information on a beam index along with information on a time resource to which the corresponding beam index is applied, through the beam indication for the access link. The NCR-Fwd performs transmission/reception on the time resource indicated by the received time resource information through the access link in a beam direction corresponding to the indicated beam index. In this case, a specific time resource is represented by a starting slot, starting symbol, and/or symbol duration, and the corresponding values may be indicated for the time resource. Upon receiving such information, the NCR may determine that the time resource is composed of symbols over a continuous symbol duration starting from the starting symbol in the starting slot.

It has been agreed that among the beam indications for the access link of the NCR, a reference SCS and period are configured in periodic/semi-persistent indications, and a dynamic indication does not have a period. Therefore, in a single periodic/semi-persistent indication, there may be no occurrence of collision. However, when periodic/semi-persistent configurations are indicated multiple times based on different periods/SCSs, there may be time durations where the time domain resources of the indications overlap. In this case, NCR operations based on a priority rule are required. The NCR needs to be transparent to the UE. When the priority rule is not defined, if time resources overlap among periodic/semi-persistent indications, it may be handled as an error case. In this case, there may be cases where the gNB is incapable of predicting the operation of the NCR, resulting in a lack of transparency to the UE. For example, when time resources overlap among periodic/semi-persistent indications, arbitrary beam switching by the NCR may occur. In particular, the beam for the access link of the NCR indicated by the gNB may be a beam for transmitting cell-specific signals/channels (or even if the beam is for UE-specific signals/channels, the beam may be for relatively important signals/channels (e.g., CSI-RS, SRS, UE-specific search space, etc.)). In this case, due to other indications or methods, the NCR may determine that the gNB indicates a beam change and may override a preconfigured beam with a new beam, which may have a significant impact on UEs served by the NCR. In addition, to prevent such situations in advance, if it is assumed that the beam indicated by a specific method is always maintained, not only is the flexibility of beam indications restricted, but also it may not be appropriate, even considering the introduction of NCR OFF indications for the purpose of power saving. Therefore, methods of configuring a priority among access link beam configuration indications will be described

Hereinafter, the aperiodic (dynamic) indication method among the access link beam indications will be described. Based on the result of the agreement in the aforementioned scenario, it may be considered that the NCR receives the aperiodic (dynamic) access link beam indication via DCI from the gNB and applies the access link beam. In this case, the maximum number of access link beams that the gNB is capable of indicating to the NCR through a single DCI indication is Lmax. That is, it is assumed that the gNB indicates up to Lmax beams in a single DCI indication for providing the aperiodic (dynamic) beam indication to the NCR. If the bit width for the beam indication is k bits, the NCR may assume that Lmax * k bits for the aperiodic (dynamic) access link beam indication for the NCR are included in the corresponding DCI.

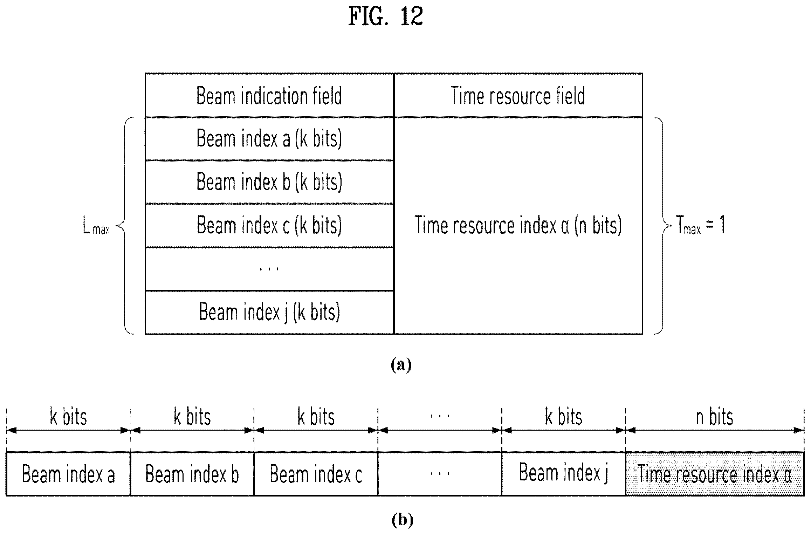

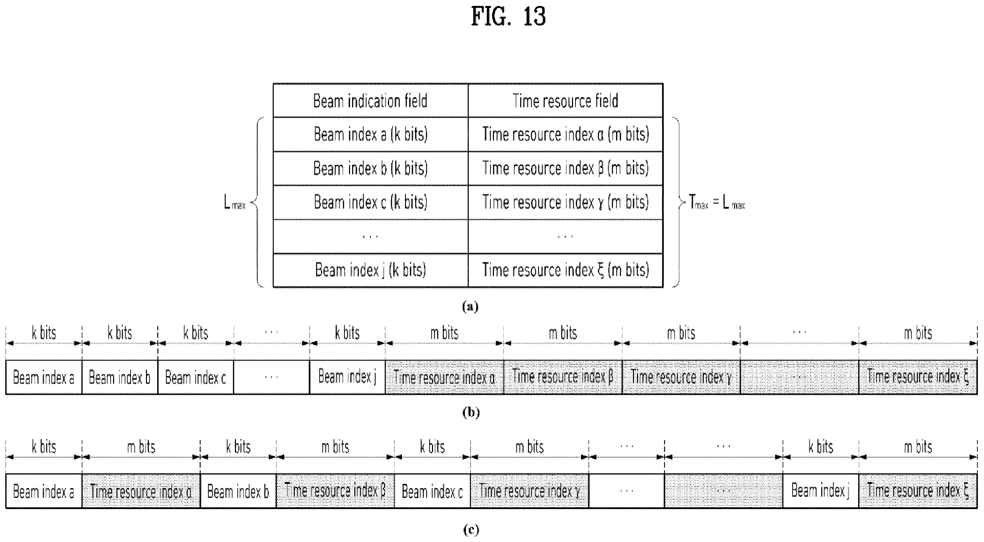

FIGS. 12 and 13 are diagrams for illustrating DCI for an aperiodic (dynamic) indication of an access link beam.

Referring to FIGS. 12 and 13, the DCI for the aperiodic (dynamic) indication of the access link beam may include a plurality of beam index fields and at least one time resource field.

For the aperiodic (dynamic) indication of the access link beam, the time resource field included in a single indication of the DCI may indicate time resources based on at least one of the following two options.

First, as shown in FIG. 12(a), the DCI may indicate time resources with a single field ($T\_max = 1$; one time resource indication index or one time resource indication field). Alternatively, as shown in FIG. 13(a), the DCI may indicate time resources with multiple fields corresponding to the number of beam indication fields ($T\_max = L\_max$; $L\_max$ time resource indication indices or $L\_max$ time resource indication fields).

Meanwhile, FIGS. 12 and 13 are merely examples of the bit structure of DCI when the aperiodic (dynamic) indication includes a single or multiple time resources, and do not assume that bit fields for other information are not included in the DCI. That is, for convenience of explanation, the beam indication field and time resource field of the DCI are illustrated as examples, but it may be considered that bit fields for other information are included in the DCI. In the following description, the terms "beam information field" and "beam indication field" are used interchangeably, and the terms "beam information field" and "beam indication field" may refer to DCI bit fields for indicating beam indices.

In both cases, the time resources are predefined by RRC. Thus, the difference between the two cases lies in how finely the time resources are configured by RRC and the method of indicating the access link beam of the NCR. Additionally, in all cases, when the gNB indicates the access link beam of the NCR, the gNB may not always indicate Lmax beams. That is, a case where only L (< Lmax) beams are indicated may be considered. If such a case is not considered, the gNB may always have to indicate a fixed number of beam indications when indicating the access link beam to the NCR through the aperiodic (dynamic) indication. In this case, the scheduling flexibility of the gNB may be limited. Additionally, if a priority between the dynamic indication and the periodic indication of the NCR is introduced, the operation of a scheduler may be significantly restricted.

Therefore, when the gNB indicates the access link beam of the NCR in an aperiodic (dynamic) manner, it is necessary to support a case where only L (< Lmax) beams are indicated. In this case, the ON/OFF indication of the NCR needs to be considered. According to the ON/OFF-related operation of the NCR defined from the agreements in the aforementioned scenario, the NCR is turned on in time/frequency/space resources where a beam indication is present, and the NCR is turned off in time/frequency/space resources where a beam indication is not explicitly indicated. In addition, whether an explicit OFF indication is supported is still under discussion, and the related agreements are shown in Table 8 below.

[Table 8]

| Agreement 4 |
|---|
| The NCR-Fwd is always expected to be "OFF" unless otherwise explicitly or implicitly indicated by gNB. <br> - Note-1: This applies to the case regardless of the RRC state of NCR-MT. <br> - Note-2: Indication (e.g., received when NCR-MT in RRC-connected) or DRX state of NCR-MT to control the ON-OFF behaviour of NCR-Fwd when the NCR-MT is in RRC-idle/inactive is not precluded. <br> The above is not meant to imply any signalling design for NCR-Fwd ON-OFF. |
| For FR2, the "ON" state of NCR-Fwd is indicated: <br> - Alt-2: Implicit indication via the beam indication (i.e., if there is beam indication, the NCR is assumed to be ON over the indicated time domain resource associated with corresponding beam(s)) |
| For FR1, the "ON" state of NCR-Fwd is indicated: <br> Alt-2: Indication via the beam indication (i.e., if there is beam indication, the NCR is assumed to be ON over the indicated time domain resource associated with corresponding beam(s)) <br> - When there is only one beam, the sole purpose of the beam indication is for indicating "ON" state of NCR-Fwd |

Therefore, when the gNB indicates L (< Lmax) beams as the access link beam of the NCR through the aperiodic (dynamic) indication, the aperiodic indication may correspond to or be independently separated from the OFF indication for the NCR. That is, when the gNB indicates the access link beam of the NCR through the aperiodic (dynamic) indication as described below, in order to indicate L (< Lmax) beams, the gNB may indicate that among Lmax access link beam indications indicated by the DCI, only L access link beam indications are valid, and the remaining Lmax - L access link beam indications are invalid. The NCR may configure/determine the access link beam based on the L valid access link beam indications according to the indication from the gNB, and may determine not to transmit or receive information/-signals through the access link based on the Lmax - L invalid access link beam indications. That is, the invalid access link beam indications included in the DCI from the gNB to the NCR, which will be described below, may be determined/regarded as an OFF indication for the NCR or as an indication related to the use of a default beam. For example, the NCR may determine that the invalid access link beam indication does not affect the configuration of the access link beam. Alternatively, the NCR may determine/regard the invalid access link beam indication as an implicit indication related to the OFF operation.

To indicate invalid access link beam indications among access link beam indications that the gNB provides to the NCR via DCI, at least one of the following alternatives may be considered based on the above description.

(1) Alternative 1

In Alternative 1, when the NCR receives access link beam indications from the gNB via DCI, the NCR may determine at least one invalid access link beam indication among the indicated access link beam indications based on a specific time resource field in the DCI.

The gNB may indicate the access link beam of the NCR in the form of {beam index, time resource} via DCI. The NCR may apply a beam corresponding to the indicated beam index on the access link during a time resource indicated by the DCI. The NCR may determine the validity of the beam configuration (i.e., {beam index, time resource}) in relation to the time resource indicated through the time resource field. For example, the DCI may have a time resource field or time resource associated with each beam information field. The NCR may determine the validity of the beam indication indicated by the beam information based on a value indicated in the time resource field associated with the beam information field or based on information on the time resource. If the value indicated by the time resource field corresponds to a predefined specific value (e.g., a reserved value such as a specific code point), the NCR may determine that the beam indication indicated through the beam information associated with the corresponding time resource is invalid. Alternatively, if the indicated time resource corresponds to a predefined specific time resource (e.g., a time resource with a duration of 0), the NCR may determine that the beam indication according to the beam information associated with the specific time resource is invalid. At least one of Option 1 and Option 2 may be considered.

1) Option 1

The gNB may configure, in advance via RRC, a specific time resource used for the DCI-based access link beam indication for the NCR as a time resource for an invalid beam indication. Based on the operation according to the aforementioned scenario, the gNB may configure, via RRC, time resources for the purpose of indicating the access link beam related to the aperiodic (dynamic) indication for the NCR. In this case, the gNB may indicate the specific time resource among the time resources to indicate that the access link beam indication is invalid. When the NCR receives a beam configuration (i.e., {beam index, time resource}) indicated along with the specific time resource from the gNB, the specific time resource for indicating invalidity may be determined to correspond to an invalid beam indication/configuration. The specific time resource may be configured based on prior agreements. That is, it may be considered that the index of the specific time resource is reserved for indicating an invalid beam configuration/indication.

For example, the specific time resource used to indicate that the access link beam indication is invalid may be indicated/configured through the following methods.

- A method of indicating a time resource with a symbol duration, a method of indicating the number of symbols that exceeds a predefined configurable value (e.g., exceeds the slot boundary), or a method of indicating a symbol duration below a specific number may be considered. For example, indicating the time resource with a symbol duration of 0 may serve as the specific time resource for indicating that the access link beam indication is invalid. That is, the beam information field of the DCI indicating the access link beam may indicate a specific beam index, and the specific time resource (or the index of the specific time resource) in the time resource field mapped thereto may indicate a symbol duration of 0 to indicate that the access link beam indication is invalid.

To enable such an operation, the gNB may configure one of the time resources with a symbol duration of 0 via RRC in advance for the aperiodic (dynamic) indication to the NCR. The specific time resource is mapped to the index of a time resources configured by RRC, and the gNB may indicate the index of the specific time resource to the NCR through the aperiodic (dynamic) indication via DCI. As an example of this method, Table 9 may be considered. Alternatively, the specific time resource may be a time resource whose symbol duration is indicated as less than or equal to a specific value (e.g., with a duration of 1 or less).

[Table 9]

| Value for time resource field in DCI | description | Duration indicated by time resource in symbol(s) |
|---|---|---|
| 0 | Time resource index $\alpha$ | 3 |
| 1 | Time resource index $\beta$ | 4 |
| 2 | Time resource index $\gamma$ | 4 |
| ... | ... | ... |
| **k** | **Time resource index$\delta$** | **0** |
| ... | ... | ... |
| N | Time resource index $\zeta$ | 13 |

The method of using a specific time resource for an invalid beam configuration based on prior agreements may be considered to be used when the gNB indicates the access link beam indication to the NCR via DCI. For example, the method may also be considered for use when the gNB indicates the access link beam of the NCR through RRC or a MAC-CE.

2) Option 2

The gNB may indicate/configure to the NCR a specific value of the time resource field used in the DCI-based access link beam indication as a value for the invalid beam indication.

According to the currently agreed operation, the gNB may configure the time resources to be used for the aperiodic (dynamic) access link beam indication to the NCR via RRC in advance to aperiodically (dynamically) indicate the access link beam of the NCR. In this case, the gNB may indicate that the corresponding access link beam indication is invalid by using a specific value or code point value of the time resource field, which is regardless of the values of the time resources for the access link beam indication configured to the NCR via RRC. If the specific value or code point value of the time resource field is indicated together with the corresponding beam index (i.e., {specific beam index, code point or specific value}), the beam configuration for the specific beam index may be determined as invalid. The specific value or code point of the time resource field in the DCI, used to indicate that such an access link beam indication is invalid, may be configured based on prior agreements. That is, it may be considered to reserve the specific value of the time resource field in the DCI for indicating an invalid beam configuration.

The configuration of the time resource field in the DCI according to such a method may involve reserving a specific code point value or indicating a value other than values for indicating RRC-configurable predefined time resources. For example, the reserved value of the specific code point may be defined as shown in Table 10.

[Table 10]

| Value for time resource field in DCI | description | Duration indicated by time resource in symbol(s) |
|---|---|---|
| 0 | Time resource index $\alpha$ | 3 |
| 1 | Time resource index $\beta$ | 4 |
| 2 | Time resource index $\gamma$ | 4 |
| ... | ... | ... |
| N | Time resource index $\zeta$ | 13 |
| **Code point x** | **Not available** | **Not available** |

The method of using a specific value or code point in the time resource field of the DCI to indicate that the access link beam indication is invalid does not need to be preconfigured by RRC, unlike Option 1 described above. The method may reduce signaling overhead and may be applied even when there is no prior configuration configured through RRC.

In determining the validity of a beam indication based on Option 1 and/or Option 2 in Alternative 1, the NCR may consider the following methods.

- If the NCR determines that a specific beam indication among Lmax beam indications received from the gNB via single DCI is invalid, the NCR may determine multiple beam indications as invalid based on that specific beam indication. For example, the NCR may receive the Lmax beam indications from the gNB via the single DCI are provided in a certain order. Specifically, the NCR may determine the validity of the first to Lmax-th beam indications based on the order of the Lmax beam indications received from the gNB via the single DCI (which is derived through an indication from the gNB or based on prior agreements). In this case, if the NCR determines that the k-th beam indication is invalid based on the DCI, the NCR may determine that all beam indications from the k-th to the Lmax-th are invalid. Alternatively, the NCR may determine the validity of each of the Lmax beam indications received from the gNB via the single DCI independently. For example, if the NCR determines that the k-th beam indication among the Lmax beam indications received from the gNB via the single DCI is invalid, the NCR may determine that only the k-th beam indication is invalid.

In a specific scenario (RAN1#112b-e meeting), it was agreed that, with the introduction of RRC parameters related to the aperiodic beam indication of the NCR, an aperiodic forwarding time resource ID is configured to the NCR-MT via RRC. Additionally, the parameters configured to the NCR via an RRC configuration to indicate the aperiodic forwarding time resource are as follows: an aperiodic time resource ID, a slot offset, a symbol offset, a duration in units of symbols, and a reference SCS.

In the case of Option 1 of Alternative 1, a method where a specific aperiodic forwarding time resource ID among aperiodic forwarding time resource IDs configured by the gNB to the NCR via RRC indicates an invalid aperiodic beam indication is considered. The NCR may determine the aperiodic forwarding time resource ID used for indicating an invalid indication according to the following methods.

- Method 1: If one or more components that constitute the aperiodic forwarding time resource (symbol duration, slot offset, periodicity, etc.) are not configured for the specific aperiodic forwarding time resource ID, the corresponding aperiodic forwarding time resource ID may represent a time resource ID for indicating an invalid indication. For example, for the specific aperiodic forwarding time resource ID, one or more of the following configurations: slot offset, symbol offset, duration in units of symbols, or reference SCS may not be configured. In this case, the NCR may determine that the gNB intends to use the corresponding aperiodic forwarding time resource ID for indicating an invalid indication. Therefore, when the aperiodic forwarding time resource ID is indicated for the aperiodic beam indication via DCI, the NCR may determine that the corresponding beam indication is invalid and may not apply the beam indication.

- Method 2: If the specific aperiodic forwarding time resource ID has some or all of the components constituting the aperiodic forwarding time resource (symbol duration, slot offset, periodicity, etc.) in specific combinations or as specific values, the corresponding aperiodic forwarding time resource ID may represent a time resource ID for indicating an invalid indication. For example, specific combinations of all or some of the configurable values of a slot offset, symbol offset, duration in units of symbols, and reference SCS may be used. A combination of time resources configured with the minimum configurable values for all or some of time resource parameters or a combination of time resources configured with the maximum values may be considered. Alternatively, specific combinations such as a combination of symbol offset = 0 and symbol duration = 1 and a combination of slot offset = 0, symbol offset = 0, and symbol duration = 1 may be considered. In this case, the NCR may determine that the gNB intends to use the corresponding aperiodic forwarding time resource ID for indicating an invalid indication. Therefore, when the aperiodic forwarding time resource ID is indicated for the aperiodic beam indication via DCI, the NCR may determine that the corresponding beam indication is invalid and may not apply the beam indication.

In the case of Option 2 of Alternative 1, a method where a specific aperiodic forwarding time resource ID among aperiodic forwarding time resource IDs configured by the gNB to the NCR via RRC does not indicate an invalid aperiodic beam indication is considered. The NCR may determine an invalid indication among the aperiodic beam indications received from the gNB via DCI according to the following methods.

- Method 1: When the gNB indicates an aperiodic forwarding time resource ID that is not configured by RRC to the NCR via DCI for indicating aperiodic beam information, the NCR may determine that the corresponding time resource ID is for an invalid indication.

This may be considered in the following two cases.

First, a case where the aperiodic forwarding time resource ID is directly indicated in the DCI may be considered. That is, assuming the number of aperiodic forwarding time resource IDs configurable via RRC is N_max, it may be considered that the size of a DCI bit field for indicating the time resource ID for aperiodic beam information is $\lceil \log_2(N\_max) \rceil$. This has the advantage that the aperiodic forwarding time resource ID indicated by the DCI bit field does not need to be separately provided when the RRC configuration is updated, but it may have a drawback in terms of DCI overhead. Assuming that N_max is the total number of aperiodic forwarding time resource IDs that the gNB is capable of configuring via RRC, if 2^m < N_max < 2^(m+1) (where m is an arbitrary integer), it may be considered that the 2^(m+1) - N_max values in the DCI bit field for indicating the time resource ID for aperiodic beam information are used solely for an invalid indication. On the other hand, when N_max is the total number of aperiodic forwarding time resource IDs that the gNB is capable of configuring via RRC, if N_max = 2^m (where m is an arbitrary integer), the NCR may determine that the gNB may not indicate an invalid indication using a time resource.

Second, it may be considered that the aperiodic forwarding time resource ID is not directly indicated by DCI, but the aperiodic forwarding time resource ID has a mapping relation with a DCI bit field. This has an advantage in terms of DCI overhead but may have a drawback in that the aperiodic forwarding time resource ID indicated by the DCI bit field needs to be separately indicated when the RRC configuration is updated. The mapping relation between the DCI bit field and the aperiodic forwarding time resource ID may be indicated by the gNB to the NCR through RRC/MAC-CE for each RRC configuration or upon each update of the RRC configuration. If the gNB does not use all aperiodic forwarding time resource IDs configurable via RRC, the NCR may configure a time resource for indicating an invalid indication. That is, assuming the number of aperiodic forwarding time resource IDs configured by the gNB via RRC is N, it may be considered that the size of a DCI bit field for indicating the time resource ID for aperiodic beam information is $\lceil \log_2(N\_max) \rceil$. When the number of aperiodic forwarding time resource IDs configured by the gNB via RRC is N, if 2^m < N < 2^(m+1) (where m is an arbitrary integer), the NCR may consider that the 2^(m+1) - N values in the DCI bit field for indicating the time resource ID for aperiodic beam information are used for an invalid indication. On the other hand, assuming the number of aperiodic forwarding time resource IDs configured by the gNB via RRC is N, the NCR may consider a case where N = 2^m (where m is an arbitrary integer). If the gNB indicates a time resource to the NCR to indicate aperiodic beam information, it may consider that the size of a DCI bit field for indicating the aperiodic forwarding time resource ID is $\lceil \log_2(N\_max) \rceil$ rather than $\lceil \log_2(N) \rceil$. Alternatively, the gNB may consider using a DCI bit field size of $\lceil \log_2(N\_max) \rceil$ for the purpose of not indicating the aperiodic forwarding time resource ID to the NCR.

That is, if the number of aperiodic forwarding time resource IDs configured by the gNB via RRC is N (where N = 2^m, and m is an arbitrary integer), while a mapping relationship between the aperiodic forwarding time resource IDs configured by the gNB via RRC and DCI bit values is configured, or the DCI bit field size is determined through an implicit or explicit configuration of the DCI bit field size, if the NCR is indicated or determines that the DCI bit field size is $\lceil \log_2(N\_max) \rceil$, the NCR may expect that the gNB will indicate an invalid indication based thereon. Alternatively, if the number of aperiodic forwarding time resource IDs configured by the gNB via RRC is N (where N = 2^m, and m is an arbitrary integer), while a mapping relationship between the aperiodic forwarding time resource IDs configured by the gNB via RRC and DCI bit values is configured, or the DCI bit field size is determined through an implicit or explicit configuration of the DCI bit field size, if the NCR is indicated or determines that the DCI bit field size is $\lceil \log_2(N) \rceil$, the NCR may expect that the gNB will not indicate an invalid indication using a time resource.

(2) Alternative 2

The NCR may determine an invalid beam indication among access link beam indications received from the gNB via DCI based on a beam indication field.

When the gNB provides the access link beam indication of the NCR via DCI, the access link beam indication is provided in the form of {beam index, time resource}. The NCR determines that a beam indicated by a beam index is to be applied to the access link during the time duration indicated by the time resource. In this case, the NCR may determine, based on the indicated beam indication field, that the corresponding beam configuration, that is, {beam index, time resource} is invalid.

For each beam information field, there exists an associated time resource field or time resource. The NCR determines the validity of the beam indication indicated by the field based on a value of the beam information field or information indicated by the field. If the value indicated by the beam information field corresponds to a predefined specific value (e.g., a reserved value such as a specific code point), the NCR determines that the beam indication is invalid. Alternatively, if the indicated beam index corresponds to a predefined specific beam index (for example, a beam index not reported by the NCR or a beam index not preconfigured by the gNB to indicate the beam to the NCR), the NCR determines that the beam indication is invalid. In this case, the NCR does not apply the corresponding beam information in the time resource field associated with the beam information field.

According to the current agreement, signaling regarding the number and characteristics of beams that the NCR is capable of using for the access link beam is provided to the gNB via OAM. That is, depending on the implementation, the NCR reports to the gNB beam information applicable to the access link beam. To this end, detailed methods for indicating an invalid beam indication through a specific beam indication field may consider Option 1 and Option 2 described below.

1) Option 1

The gNB may consider configuring a specific beam index used in the DCI-based access link beam indication for the NCR as a beam index for an invalid beam indication.

The specific beam index may be configured based on prior agreements. That is, it may be considered to reserve the specific beam index for indicating the invalid beam configuration.

Before indicating the aperiodic (dynamic) access link beam to the NCR, the gNB may consider information on some beams among all beams that the NCR is capable of applying to the access link, that is, all beams supported by the NCR for the purpose of the aperiodic (dynamic) beam indication for the access link. In other words, the gNB may consider preconfiguring N_AC (the number of access link beams indicated via DCI), which is less than or equal to N_Support (the number of access link beams supported by the NCR), before indicating the aperiodic (dynamic) access link beam to the NCR (N_Support ≥ N_AC). This is intended to reduce the size of the beam indication field in the DCI when the gNB indicates one or more access link beams to the NCR based on the total number of beams supported by the NCR. In such a case, the specific beam index used to indicate that the access link beam indication is invalid may be indicated by the gNB to the NCR according to the following methods.

When the gNB configures information on N_AC beams (where N_Support ≥ N_AC) via RRC/MAC-CE/DCI to the NCR prior to indicating the aperiodic (dynamic) access link beam, the NCR may expect that one or more of the configured N_AC beams will be configured as beams for the invalid beam indication. For example, the following may be considered. A time resource field in the DCI that indicates the access link beam points to a specific time resource. To indicate that the beam index mapped through the beam indication field corresponds to an invalid access link beam indication, physical beam information corresponding to a specific beam index applicable to the access link by the NCR may be left empty. A value outside the physical beam information reported by the NCR to the gNB, i.e., a beam other than the access link beams reported by the NCR may be mapped and preconfigured by the gNB to the NCR. This is shown in Table 11.

[Table 11]

| Value for beam indication field in DCI | description | Physical beam index for access link |
|---|---|---|
| 0 | Beam index a | 0 |
| 1 | Beam index b | 1 |
| 2 | Beam index c | 2 |
| ... | ... | ... |
| K | Beam index h | Not available |
| .. | | ... |
| N | Beam index $N_{AC}$ | j |

Alternatively, when the NCR provides the gNB with physical beam information applicable to the access link via OAM, the gNB may, based on prior agreements, recognize that a specific physical beam reported by the NCR is intended for the invalid access link beam indication, and understand that the beam index mapped to the specific physical beam is used to indicate the invalid indication. Alternatively, the NCR may consider reporting to the gNB, via RRC, MAC-CE, UCI, or capability signaling, that the specific physical beam delivered to the gNB via OAM or implementation is intended for the invalid access link beam indication.

Alternatively, the above method may also be extended and applied when the gNB does not configure information on N_AC beams (where N_Support ≥ NAC) in advance for the aperiodic access link beam indication, that is, when the gNB indicates the aperiodic access link beam indication based on all beam information supported by the NCR, the same approach may be considered. In other words, to provide the invalid access link beam indication through the aperiodic access link beam indication, it may be considered to leave the physical beam information corresponding to a specific beam index, which the NCR is capable of applying to the access link beam, empty, or to map a value outside the physical beam information reported by the NCR to the gNB, i.e., a beam other than the access link beams provided by the NCR.

2) Option 2

The gNB may determine that a specific value of the beam indication field used in the DCI-based access link beam indication to the NCR is a value for an invalid beam indication.

Unlike Option 1, instead of reserving a specific beam index for an invalid beam configuration, it may be considered to reserve a specific value of the beam indication field in the DCI for indicating the invalid beam indication. Regardless of a set of beam indices or time resources configured by the gNB to the NCR via RRC for the access link beam indication, the gNB may consider using a specific value or code point in the field that indicates such beam indices via DCI to indicate that the access link beam indication is invalid. When a beam configuration, that is, {beam index, code point for time resource} is received along with a specific value or code point in the DCI field that indicates the beam index, used for indicating that the access link beam indication is invalid, it may be considered that the configuration is to be regarded as invalid. Such a specific value or code point in the beam indication field of the DCI, used to indicate that the access link beam indication is invalid, may be configured based on prior agreements.

The configuration of the beam indication field in the DCI according to a method may, for example, involve reserving a specific code point value or indicating a value other than values used to represent predefined RRC-configurable beam indices. An example of reserving a specific code point value is shown in Table 12.

[Table 12]

| Value for beam indication field in DCI | description | Physical beam index for access link |
|---|---|---|
| 0 | Beam index a | 0 |
| 1 | Beam index b | 1 |
| 2 | Beam index c | 2 |

(continued)

| Value for beam indication field in DCI | description | Physical beam index for access link |
|---|---|---|
| ... | ... | ... |
| N | Beam index $N_{AC}$ | j |
| Code point x | Not available | Not available |

The method of using a specific value or code point in the DCI field that indicates the beam index to represent an invalid access link beam indication, unlike the method in Option 1, does not require preconfiguring information via RRC, thereby reducing signaling overhead and offering the advantage of being usable even when RRC is not configured.

In determining the validity of a beam indications received by the NCR from the gNB via DCI based on Option 1 and Option 2 in Alternative 2, the NCR may consider the following methods. If the NCR determines that a specific beam indication among Lmax beam indications received via single DCI from the gNB is invalid, the NCR may determine that multiple beam indications including the corresponding indication are invalid. For example, the NCR may consider a case where the Lmax beam indications received from the gNB via the single DCI have an order. That is, the NCR may consider a case where the Lmax beam indications received from the gNB via the single DCI are derived from the first beam indication to the Lmax-th indication from the gNB or based on prior agreements. If the NCR determines that the k-th beam indication is invalid, the NCR may determine that all beam indications from the k-th to the Lmax-th are also invalid.

Alternatively, the NCR may consider determining the validity of each of the Lmax beam indications received from the gNB via the single DCI independently. For example, if the NCR determines that the k-th beam indication among the Lmax beam indications received from the gNB via the single DCI is invalid, the NCR may determine that only the k-th beam indication is invalid.

(3) Alternative 3

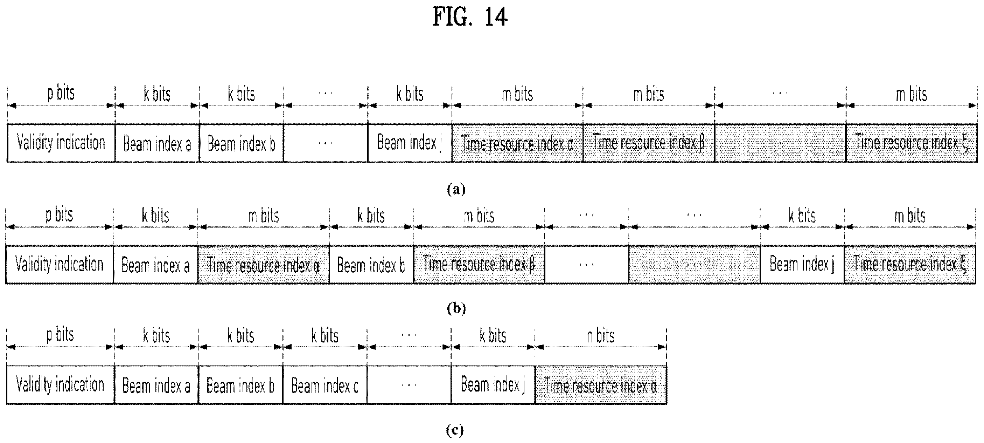

FIG. 14 is a diagram for explaining DCI that further includes a validity indication field.

Referring to FIG. 14, in Alternative 3, the NCR may receive, via DCI, information indicating the number of valid beam indications or the number of invalid beam indications.

Specifically, the gNB may transmit DCI to the NCR to configure the access link beam of the NCR. The DCI may include: the number of valid beam indications among the Lmax beam indications, the number of valid beam information fields (and time resource fields), the number of bits containing valid information (i.e., the position of the last bit among the DCI bits used for determining/interpreting validity), and a specific bit that directly indicates the starting bit location of the last beam information field containing valid information. For example, the gNB may include a specific bit field (or a validity indication field) with a bitwidth of p bits in the DCI for indicating the access link beam to the NCR. In this case, the NCR may consider determining the valid beam indications among the Lmax beam indications indicated by the gNB through single DCI based on the specific bit field (or validity indication field). Here, the number of p bits used to indicate a portion of the Lmax beam indications in the specific bit field (or validity indication field) may be determined as $p = \lceil \log_2(L\_max) \rceil$.

Alternatively, the value of p may be configured to always be smaller than $\lceil \log_2(L\_max) \rceil$. That is, p may always be set within the range of $p \leq \lceil \log_2(L\_max) \rceil$.

Alternatively, the gNB may transmit to the NCR DCI that includes information on the number of invalid beam indications in order to configure the access link beam of the NCR. Specifically, the DCI may include the validity indication field that directly indicates: the number of invalid beam indications among the Lmax beam indications, the number of invalid beam information fields (and time resource fields), the number of bits containing invalid information (i.e., the position of the first bit among the DCI bits that are not interpreted), and the starting bit location of the first invalid beam information field. For example, the gNB may include the validity indication field with a bitwidth of p bits in the DCI for the access link beam indication to the NCR. In this case, the NCR may determine at least one invalid beam indication among the Lmax beam indications indicated by the gNB in the single DCI based on the validity indication field. Here, the value of p used to indicate a portion of the Lmax beam indications may be considered to satisfy $p \leq \lceil \log_2(L\_max) \rceil$.

That is, when the NCR receives DCI for the aperiodic (dynamic) indication of the access link beam from the gNB, the NCR may determine, based on the validity indication field of the DCI, that Y ($Y \leq X$) out of the total X access link beam indications in the form of {beam index, time resource} indicated by the DCI are valid or invalid. The validity indication field indicating the validity or invalidity of the Y access link beam indications may use p bits. For example, the validity indication field of the DCI may be included in the DCI in the form shown in FIG. 12 (a), (b), or (c).

In determining the validity of the beam indication based on the DCI received from the gNB as described above, the NCR may consider the following methods.

- If the NCR determines that a specific beam indication among the Lmax beam indications in the single DCI received from the gNB is invalid, the NCR may consider or determine that at least one of the Lmax beam indications is invalid based on the specific beam indication indicating that the validity indication field is invalid. For example, the NCR may identify the at least one invalid beam indication by considering the sequence order of the Lmax beam indications received from the gNB via the single DCI. Specifically, the NCR may derive or determine the order of the first to the Lmax-th beam indications among the Lmax beam indications received from the gNB via the single DCI (through indications or based on prior agreements). In this case, if the NCR determines, based on the validity indication field of the DCI, that the k-th beam indication is invalid, the NCR may identify all beam indications from the k-th to the Lmax-th beam indications as invalid beam indications.

Alternatively, the NCR may independently determine the validity of each of the Lmax beam indications received from the gNB via the single DCI. For example, if the NCR determines (based on the validity indication field of the DCI) that the k-th beam indication among the Lmax beam indications received from the gNB is invalid, the NCR may determine that only the k-th beam indication is invalid among the Lmax beam indications.

In the method of Alternative 3, for multiple forwarding resources and multiple beam indications (i.e., pairs of {beam index, time resource index}) indicated via the DCI, the NCR may receive information indicating the number of valid forwarding resources or the number of invalid forwarding resources.

The gNB may indicate invalid forwarding resources through the validity indication field of the DCI. However, if specific conditions are satisfied, the gNB may not include the validity indication field in the DCI. For example, if Tmax (i.e., the number of time resources preconfigured by the gNB for indicating the beam of the NCR via RRC) is less than or equal to a specific value, the NCR may determine or assume that the validity indication field for indicating invalid beam indications is not included in the DCI. Alternatively, the NCR may expect or determine that the validity indication field, as a bit field related to the access link beam indication in the DCI, is not included. For instance, when Tmax = 1, the NCR may determine that the validity indication field is not included in the DCI.

Specifically, considering the complexity limitations of the NCR (or UE), the overhead of DCI may need to be fixed. However, due to the DCI being composed of fixed bits, fixing the number of access link beam indications be signaled in single DCI may impose limitations on scheduling flexibility. Therefore, Alternative 3 proposes adding the validity indication bits or validity indication field to the DCI to ensure the scheduling flexibility. However, when the number of time resource fields related to the access link beam indication of the NCR, denoted as Tmax, is not large, including the validity indication field in the DCI may result in unnecessary DCI overhead. To improve this issue, when the gNB preconfigures the Tmax value for the access beam indication of the NCR via RRC, it may be expected that DCI that does not include the validity indication field will be used if the preconfigured Tmax is below a specific value. In this case, based on prior agreements, the NCR may expect or anticipate that the access link beam indication will be carried out through the DCI that does not include the validity indication field. Conversely, if the preconfigured Tmax exceeds the specific threshold, the NCR may expect or anticipate that the access link beam indication will be carried out through the DCI that includes the validity indication field. Accordingly, the above proposal allows for securing scheduling flexibility while minimizing DCI overhead waste by configuring the DCI according to the situation.

Alternatively, when the gNB indicates the access link beam to the NCR via the DCI that includes the validity indication field, the validity indication field may indicate the number of invalid (time) resources using a limited number of bits based on the following methods.

For example, it may be considered that p bits are used to indicate a portion of the Lmax beam indications the number of aperiodic access beam indications provided by the gNB to the NCR via single DCI, where

$$p = \lceil \log_2(L\backslash\_max) \rceil$$ . Alternatively, the value of p may be configured to always be smaller than

$\lceil \log_2(L\backslash\_max) \rceil$ . That is, p may always be set within the range $p \leq \lceil \log_2(L\_max) \rceil$ . In such cases, while

$$p = \lceil \log_2(L\_max) \rceil$$ bits are required to indicate the validity of each of the Lmax beam indications, but

$p < \lceil \log_2(L\_max) \rceil$ bits may be considered to reduce the DCI payload. In this case, since the p bits may not indicate the validity of all Lmax beam indications, the following methods need to be considered to indicate the validity for the Lmax beam indications.

- Group-based validity indication may be considered. Specifically, when DCI for aperiodic access link beam indications includes a (time) resource validity indication field, each bit in the validity indication field may indicate the validity of multiple forwarding resources (i.e., forwarding resources grouped together).

For example, if the number of forwarding resources capable of being indicated by single DCI for the aperiodic access link beam indication by the gNB is M (that is, when the number of forwarding resource fields indicated as pairs of {beam index, time resource index} is M), the validity indication field in the DCI may use 1 bit to indicate the validity of N forwarding resources (or N consecutive forwarding resources). In this case, the validity indication field of the DCI may include $\lceil \log_2 (M/N) \rceil$ bits to indicate the validity of the forwarding resources. The value of N may be determined based on prior agreements, and the value of N may also be configured via RRC/MAC-CE before the NCR receives the corresponding DCI. This method offers the advantage of reducing the DCI overhead for the validity indication while simultaneously maintaining a fixed DCI payload size and ensuring the scheduling flexibility of the gNB.

- The validity indication field may indicate only the number of valid or invalid beam indications/forwarding resources (or the number of beam indication fields/forwarding resource fields) among the Lmax beam indications. That is, when the gNB performs the aperiodic beam indication to the NCR via DCI, and the DCI includes the validity indication field for indicating the validity of forwarding resources, the validity indication field may indicate the validity for only a portion of the (Lmax) forwarding resources corresponding to the Lmax beam indications. For example, if the number of forwarding resources that the gNB is capable of indicating to the NCR via single DCI is M (that is, when the number of fields for forwarding resources indicated as pairs of {beam index, time resource index} is M), the validity indication field may indicate the validity of only P forwarding resources. In this case, the total number of forwarding resources indicated by the DCI is M, and the number of forwarding resources indicated by the validity indication field is P. The NCR may determine or assume that the remaining (M - P) forwarding resources not covered by the validity indication field are always considered valid. In this case, the P forwarding resources (or P forwarding resource fields) expected to be indicated by the validity indication field may be determined by sorting the M forwarding resources indicated by the DCI in ascending index order or by sorting the M forwarding resources in descending index order. In other words, the M forwarding resources indicated by the DCI may be sorted in ascending order of index, and then the P forwarding resources may be indicated starting from the lowest index. Alternatively, the M forwarding resources indicated by the DCI may be sorted in descending order of index, and then the P forwarding resources may be indicated starting from the highest index. Alternatively, the P forwarding resources (or forwarding resource fields) indicated by the validity indication field may be specified/determined based on predefined agreements. In this case, the value of P may be determined based on prior agreements and may be configured via RRC/MAC-CE before the NCR receives the corresponding DCI. This method offers the advantage of reducing DCI overhead for the validity indication while ensuring a fixed DCI payload size and maintaining the scheduling flexibility of the gNB. Here, the forwarding resources correspond to the time resources or time resource units described above.

For example, the NCR may receive a value corresponding to P through RRC signaling. If the validity indication field included in the DCI indicates a specific bit value (0 or 1), the NCR may determine that the P forwarding resources among the M forwarding resources are invalid. Alternatively, if the validity indication field in the DCI indicates a specific bit value (0 or 1), the NCR may determine that P forwarding fields among the M forwarding fields (and/or P beam indication fields) are invalid.

Alternatively, the validity indication field may indicate a certain number of beam indications/forwarding resources among the Lmax beam indications/forwarding resources on a group basis. That is, if the DCI transmitted by the gNB for the aperiodic beam indication to the NCR includes the validity indication field, the validity indication field may indicate the validity/invalidity of some of the Lmax forwarding resources, or may include 1-bit validity indication information indicating the validity/invalidity of multiple forwarding resources. For example, when the number of forwarding resources that the gNB is capable of indicating in single DCI is M (i.e., when the number of fields of forwarding resources indicated as pairs of {beam index, time resource index} is M), the DCI may indicate validity for only the P forwarding resources, and the validity for N forwarding resources may be indicated with 1 bit. In other words, the validity indication field may provide the validity indication for the P forwarding resources, and the validity may be indicated in units of N forwarding resources (i.e., a single bit value may indicate the validity of a group of N forwarding resources). In this case, the P forwarding resources may be determined or selected sequentially from the M forwarding resources indicated in the DCI, based on the lowest or the highest index. Alternatively, the P forwarding resources to which the validity indication is applied among the M forwarding resources may be determined or specified based on predefined agreements. In this case, each bit included in the validity indication field may indicate the validity for a unit (or group) of N forwarding resources. Accordingly, the validity indication field may include $\lceil \log_2(P/N) \rceil$ bits.

- When the DCI includes the validity indication field, the validity indication field may indicate the number of invalid forwarding resources/forwarding resource fields using a limited number of bits. In this case, the mapping relationship between the limited number of bits and the forwarding resources/forwarding resource fields may be defined as described below. For example, if the bit size of the validity indication field is limited to p, the validity indication field may represent 2^p different indications using the p bits. In this case, the validity indication field may indicate 2^p invalid forwarding resources/forwarding resource fields. In other words, the validity indication field may indicate the number of invalid forwarding resources/forwarding resource fields through a specific value based on the p bits, and the NCR may determine the number of invalid forwarding resources/forwarding resource fields based on the validity indication field. In this case, forwarding resources corresponding to a specific number of invalid forwarding resources/forwarding resource fields may be considered invalid. The number of invalid forwarding resources among the forwarding resources (or time resources) indicated by the DCI for each value indicated by the p bits may be determined based on prior agreements or via RRC, MAC-CE, DCI, etc.

For example, when p = 2, the values capable of being represented by the validity indication field using p bits are: 00, 01, 10, and 11. In this case, the validity indication corresponding to the values indicated by the validity indication field may be determined based on a specific mapping relationship defined in Table 13.

[Table 13]

| DCI bit | Validity indication |
|---|---|
| 00 | 00 indicates that, among the $T_{max}$ resources indicated by the DCI, the resources from the 1st resource to the 1-th resource are invalid (or indicates that the resources from the 1-th resource to the last resource are invalid). |
| 01 | 01 indicates that, among the $T_{max}$ resources indicated by the DCI, the resources from the 1st resource to the m-th resource are invalid (or indicates that the resources from the m-th resource to the last resource are invalid). |
| 10 | 10 indicates that, among the $T_{max}$ resources indicated by the DCI, the resources from the 1st resource to the n-th resource are invalid (or indicates that the resources from the n-th resource to the last resource are invalid). |
| 11 | 11 indicates that, among the $T_{max}$ resources indicated by the DCI, the resources from the 1st resource to the o-th resource are invalid (or indicates that the resources from the o-th resource to the last resource are invalid). |

In this case, the values of $\varepsilon$, m, n, and o may all be predefined values, or the values of $\varepsilon$, m, n, and o may all be determined by signaling such as RRC/MAC-CE. If all the values are predefined values, there is an advantage in that no additional signaling is required due to prior agreements. On the other hand, if all of the values of 1, m, n, and o are determined through RRC/MAC-CE, there may be advantages in terms of scheduling flexibility. Alternatively, some of the values $\varepsilon$, m, n, and o may be predefined, while the others may be determined by signaling such as RRC/MAC-CE. For example, $\varepsilon$ may be a value determined by prior agreements, while m, n, and o may be values configured by the gNB to the NCR through signaling such as RRC/MAC-CE. In this case, since the signaling overhead may be configured according to the scheduling flexibility desired by the network, there is an advantage of achieving scheduling flexibility while minimizing additional signaling.

In all of the aforementioned cases, the p bits of the validity indication field used by the gNB to configure the access link beam to the NCR may be values determined by prior agreements or values determined through signaling such as RRC/MAC-CE. For example, the p value may be directly indicated via RRC/MAC-CE, or after preconfiguring a candidate set of p values to the NCR via RRC/MAC-CE, a specific value from the candidate set may be indicated to the NCR via DCI/MAC-CE.

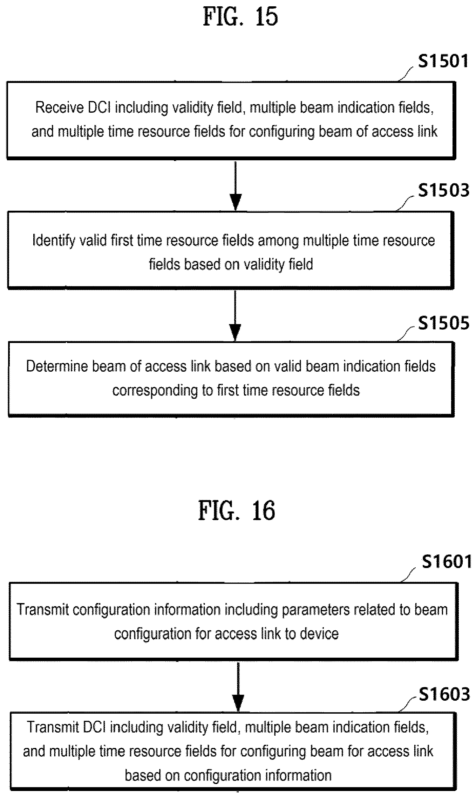

FIG. 15 is a diagram for explaining a method of determining a beam for an access link established with a UE.

Referring to FIG. 15, a device may receive DCI including a validity field, a plurality of beam indication fields, and a plurality of time resource fields for configuring a beam of the access link, via a control link established with a BS (S1501). The plurality of time resource fields may have a one-to-one mapping relationship with the plurality of beam indication fields. For example, a first time resource field among the plurality of time resource fields may correspond to a first beam indication field among the plurality of beam indication fields. In addition, the number of beam indication fields and the number of time resource fields may be determined based on the maximum number of beams that the BS is capable of indicating through the DCI. That is, regardless of the validity field, the number of beam indication fields and the number of time resource fields may be fixed to correspond to the maximum number of beams that the BS is capable of indicating through the DCI.

Meanwhile, the device may be an NCR including an NCR-MT and an NCR-fwd. In this case, the device may establish the control link with the BS through the NCR-MT. The device may establish a backhaul link for forwarding a signal received from the UE to the BS and the access link for forwarding a signal received from the BS to the UE through the NCR-fwd.

Alternatively, the device may receive configuration information related to the validity field before receiving the DCI for configuring the beam of the access link. Specifically, the device may receive, from the BS via RRC signaling, configuration information on at least one of: the size of the validity field, and the number of invalid time resource fields corresponding to each bit value included in the validity field. Alternatively, the device may receive, via RRC signaling, first configuration information for configuring the size of the validity field and the number of invalid time resource fields corresponding to some of the bit values included in the validity field. The device may receive, through a MAC-CE, second configuration information for configuring the number of invalid time resource fields corresponding to the remaining bit values excluding the bit values among the bit values included in the validity field. For example, the second configuration information may be obtained from the MAC-CE included in the DCI.

Next, the device may identify valid first time resource fields among the plurality of time resource fields based on the validity field (S1503). As described above, the BS may indicate that only some of the Lmax beam indications are valid through the DCI.

Specifically, the device may identify valid time resource fields or invalid time resource fields among the plurality of time resource fields included in the DCI, based on the validity field included in the DCI. For example, the validity field may include the number of invalid time resource fields or the number of valid time resource fields among the plurality of time resource fields. In this case, the device may identify the valid first time resource fields among the plurality of time resource fields (i.e., the above-mentioned Lmax or Tmax time resource fields), based on the number of invalid time resource fields, the number of or valid time resource fields, or the indices of the plurality of time resource fields. For example, the validity field may indicate the number of invalid/valid time resource fields (e.g., consecutive time resource fields) starting from the Tmax-th time resource field or from the first time resource field among the plurality of time resource fields. Alternatively, the validity field may further include information on the position of a starting time resource field related to the number of invalid/valid time resource fields among the plurality of time resource fields (e.g., a specific bit location in the payload of the DCI). Alternatively, the validity field may include validity indication information on each of the plurality of time resource fields.

Alternatively, as described above, the validity field may indicate the number of valid/invalid beam indication fields among the plurality of beam indication fields. In this case, the device may determine first beam indication fields that are valid among the plurality of beam indication fields, and determine first time resource fields corresponding to each of the first beam indication fields among the plurality of time resource fields. Based on the first beam indication fields, the device may determine the beam of the access link using at least one beam indicated by the corresponding beam indication field on a time resource indicated by each of the first time resource fields.

Meanwhile, the time resource fields determined to be invalid based on the validity field may include null values or reserved values.

Next, the device may determine the beam of the access link based on the valid first beam indication fields corresponding to the first time resource fields among the plurality of beam indication fields (S1505). That is, the device may determine that only the first beam indication fields corresponding to the first time resource fields (i.e., corresponding to the time resources indicated by each of the first time resource fields) among the plurality of beam indication fields are valid beam indications. For example, the device may determine that a number of consecutive time resource fields, starting from the last time resource field (or the first time resource field or a specific time resource field preconfigured by RRC signaling) among the plurality of time resource fields, are invalid based on the value indicated by the validity field. In this case, the device may determine that, among the plurality of beam indication fields, the beam indication fields that correspond to or are mapped to the invalid time resource fields include invalid beam indication information. The device may configure-e/determine the beam for a time resource corresponding to each of the first time resource fields based on the first time resource fields and the first beam indication fields determined to be valid among the plurality of beam indication fields.

Alternatively, the device may perform operations for the access link only on time resources indicated by the first time resource fields, and may not perform operations for the access link on time resources indicated by the other time resource fields. For example, the device may turn off the operation of the NCR-fwd that establishes the access link on the remaining time resources.

As described above, according to the proposal, a validity field may be included in DCI, thereby effectively and clearly indicating valid fields among a plurality of time resource fields and a plurality of beam indication fields indicated in single DCI. Alternatively, according to the proposal, the validity field included in the DCI may indicate the number of valid fields, and the size of the validity field may be fixed to a specific maximum size, thereby minimizing an increase in the payload of the DCI. Alternatively, according to the proposal, the size of the validity field and the number indicated by each bit value may be preconfigured through RRC signaling and/or a MAC-CE, thereby ensuring a fixed size for the DCI while securing scheduling flexibility for the BS. Furthermore, according to the proposal, the operation of an NCR-fwd may be turned off on time resources indicated by invalid time resource fields, thereby minimizing power consumption of the device and reducing unintended forwarding of a signals/noise.

FIG. 16 is a diagram for explaining a method of configuring a beam for an access link of a device.

Referring to FIG. 16, a BS or network may transmit configuration information including parameters related to the beam configuration for the access link (S1601). Specifically, the BS or network may transmit, via RRC signaling, configuration information on at least one of: the size of a validity field (to be included in DCI described later) and the number of invalid time resource fields corresponding to each bit value included in the validity field. Alternatively, the BS or network may transmit, to the device via RRC signaling, first configuration information for configuring the size of the validity field and the number of invalid time resource fields corresponding to some of the bit values included in the validity field. The BS or network may then transmit, to the device via a MAC-CE, second configuration information for configuring the number of invalid time resource fields corresponding to the remaining bit values excluding the bit values among the bit values included in the validity field. Meanwhile, the second configuration information may be provided to the device through a MAC-CE included in the DCI described later. Here, the device may be an NCR including an NCR-MT and an NCR-fwd.

Next, the BS or network may transmit DCI including a validity field, a plurality of beam indication fields, and a plurality of time resource fields for configuring the beam for the access link, based on the configuration information (S1603). As described above, the size of the validity field and the number of invalid/valid time resource fields corresponding to each bit value may be configured/indicated through RRC signaling/MAC-CE.

Specifically, the BS or network may indicate valid time resource fields or invalid time resource fields among the plurality of time resource fields included in the DCI, based on the validity field included in the DCI. For example, the validity field may include the number of invalid time resource fields or the number of valid time resource fields among the plurality of time resource fields. In other words, the BS or network may indicate first time resource fields that are valid among the plurality of time resource fields through the validity field, and may notify the device that only first beam indication fields corresponding to the first time resource fields among the plurality of beam indication fields are valid.

## Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

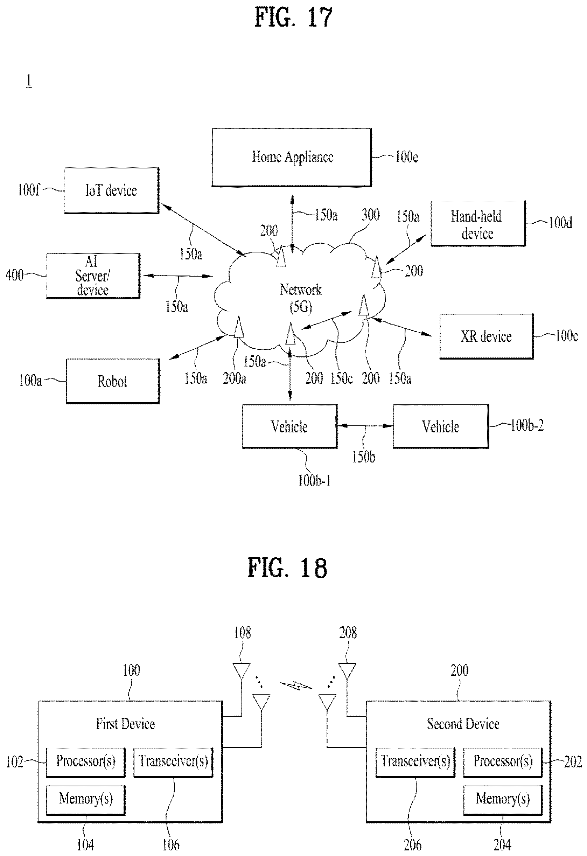

FIG. 17 illustrates a communication system applied to the present disclosure.

Referring to FIG. 17, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/-connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Examples of wireless devices to which the present disclosure is applied

FIG. 18 illustrates a wireless device applicable to the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

According to an embodiment, the first wireless device 100 or a device may include the processor(s) 102 connected to the RF transceiver 106 and the memory(s) 104. The memory(s) 104 may include at least one program configured to perform operations related to the embodiments described with reference to FIGS. 12 to 16. In addition, the device may be an NCR including an NCR-MT and an NCR-Fwd as described above.

Specifically, the processor(s) 102 may be configured to: control the RF transceiver 106 to receive DCI via the control link, wherein the DCI includes a validity field, a plurality of beam indication fields, and a plurality of time resource fields for configuring a beam of the access link; identify first time resource fields determined to be valid among the plurality of time resource fields based on the validity field; and determine the beam of the access link based on first beam indication fields corresponding to the first time resource fields among the plurality of beam indication fields.

Alternatively, there is provided a processing device configured to control a device having the processor(s) 102 and the memory(s) 104. In this case, the processing device includes at least one processor; and at least one memory connected to the at least one processor and storing instructions that, based on execution by the at least one processor, cause the UE to: receive DCI via the control link, wherein the DCI comprises a validity field, a plurality of beam indication fields, and a plurality of time resource fields for configuring a beam of the access link; identify first time resource fields determined to be valid among the plurality of time resource fields based on the validity field; and determine the beam of the access link based on first beam indication fields corresponding to the first time resource fields among the plurality of beam indication fields.

Alternatively, a non-transitory computer-readable storage medium having recorded thereon instructions for executing the proposed methods described with reference to FIGS. 12 to 16 may be configured.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

Examples of application of wireless devices to which the present disclosure is applied

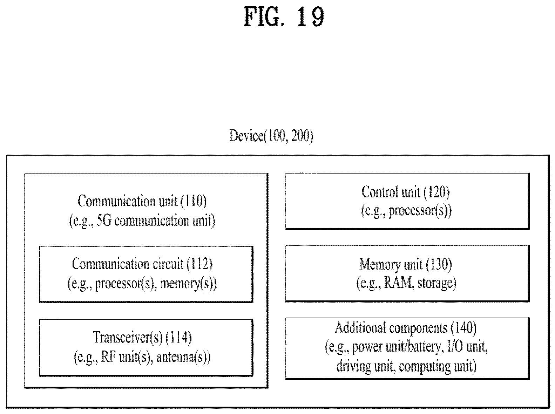

FIG. 19 illustrates another example of a wireless device applied to the present disclosure.

Referring to FIG. 19, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. In another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

## INDUSTRIAL APPLICABILITY

The above-described embodiments of the present disclosure may be applied to various mobile communication systems.

## Claims

1. A method of performing communication by a device having a control link established with a base station (BS) and an access link established with a user equipment (UE) in a wireless communication system, the method comprising:

   receiving downlink control information (DCI) via the control link, wherein the DCI comprises a validity field, a plurality of beam indication fields, and a plurality of time resource fields for configuring a beam of the access link;
   identifying first time resource fields determined to be valid among the plurality of time resource fields based on the validity field; and
   determining the beam of the access link based on first beam indication fields corresponding to the first time resource fields among the plurality of beam indication fields.

2. The method of claim 1, wherein the validity field comprises indication information on a number of invalid time resource fields among the plurality of time resource fields.

3. The method of claim 1, wherein the validity field comprises indication information on a number of valid time resource fields among the plurality of time resource fields.

4. The method of claim 1, wherein a numbers of the plurality of beam indication fields and a number of the plurality of time resource fields are determined based on a maximum number of beams that the BS is capable of indicating through the DCI.

5. The method of claim 1, wherein the device transmits and receives signals to and from the UE via the access link only on time resources corresponding to the first time resource fields among the plurality of time resource fields.

6. The method of claim 1, wherein the device turns off an operation of transmitting and receiving signals via the access link on time resources corresponding to remaining time resource fields excluding the first time resource fields among the plurality of time resource fields.

7. The method of claim 1, further comprising receiving configuration information on a size of the validity field and a number of invalid time resource fields corresponding to each bit value included in the validity field via radio resource control (RRC) signaling.

8. The method of claim 1, further comprising:

   receiving first configuration information for configuring a size of the validity field and a number of invalid time resource fields corresponding to several bits values among bit values included in the validity field via radio resource control (RRC) signaling; and
   receiving second configuration information for configuring a number of invalid time resource fields corresponding to remaining bit values except for the several bit values among the bit values included in the validity field via a medium access control (MAC) control element (CE).

9. The method of claim 1, wherein the device is a network-controlled repeater (NCR).

10. A non-transitory computer-readable storage medium having recorded thereon instructions for executing the method of Claim 1.

11. A device configured to perform communication via a control link established with a base station (BS) and an access link established with a user equipment (UE) in a wireless communication system, the device comprising:

   a radio frequency (RF) transceiver; and
   a processor connected to the RF transceiver,
   wherein the processor is configured to:

      control the RF transceiver to receive downlink control information (DCI) via the control link, wherein the DCI comprises a validity field, a plurality of beam indication fields, and a plurality of time resource fields for configuring a beam of the access link;
      identify first time resource fields determined to be valid among the plurality of time resource fields based on the validity field; and
      determine the beam of the access link based on first beam indication fields corresponding to the first time resource fields among the plurality of beam indication fields.

12. A processing device configured to control a device performing communication via a control link established with a base station (BS) and an access link established with a user equipment (UE) in a wireless communication system, the processing device comprising:

   at least one processor; and
   at least one memory connected to the at least one processor and storing instructions that, based on execution by the at least one processor, cause the UE to:

      receive downlink control information (DCI) via the control link, wherein the DCI comprises a validity field, a plurality of beam indication fields, and a plurality of time resource fields for configuring a beam of the access link;
      identify first time resource fields determined to be valid among the plurality of time resource fields based on the validity field; and
      determine the beam of the access link based on first beam indication fields corresponding to the first time resource fields among the plurality of beam indication fields.

13. A method of configuring, by a base station (BS), a beam of an access link for a device in a wireless communication system, the method comprising:

   transmitting downlink control information (DCI) via a control link established between the device and the BS, wherein the DCI comprises a validity field, a plurality of beam indication fields, and a plurality of time resource fields for configuring the beam of the access link established between the device and a user equipment (UE), wherein a plurality of first beam indication fields that are valid among the plurality of beam indication fields are identified based on the validity field indicating first time resource fields that are invalid among the plurality of time resource fields.

**14.** A non-transitory computer-readable storage medium having recorded thereon instructions for executing the method of Claim 13.

**15.** A base station (BS) configured to configure a beam of an access link for a device in a wireless communication system, the BS comprising:

a radio frequency (RF) transceiver; and
a processor connected to the RF transceiver,
wherein the processor is configured to control the RF transceiver to transmit downlink control information (DCI) via a control link established between the device and the BS, wherein the DCI comprises a validity field, a plurality of beam indication fields, and a plurality of time resource fields for configuring the beam of the access link established between the device and a user equipment (UE),
wherein a plurality of first beam indication fields that are valid among the plurality of beam indication fields are identified based on the validity field indicating first time resource fields that are invalid among the plurality of time resource fields.

# FIG. 1

# FIG. 2

# FIG. 3

# FIG. 4

# FIG. 5

# FIG. 6

# FIG. 7

Mapping between SSB blocks and uplink resources for PRACH transmission

| Downlink SS block 1 | Downlink SS block 2 | Downlink SS block 3 | Downlink SS block 4 | ... | Uplink 1 | Uplink 2 | Uplink 3 | Uplink 4 |

BS

BS

PSS, SSS, PBCH reception

PRACH transmission (same transmit beam direction as in the downlink transmit beam)

# FIG. 8

## FIG. 9

Parent node — DU

Parent link

IAB node — MT / DU

Child link

Child node — MT / DU

## FIG. 10

Network-controlled repeater(NCR)

Control link

NCR-MT(Mobile terminal)

Internal interface

Forwarding link for backhaul(FLB)

NCR-RU(Radio Unit)

Forwarding link for sevice(FLS)

gNB

UE

# FIG. 11

(a)                                    (b)

EP 4 668 982 A1

## FIG. 12

| Beam indication field | Time resource field |
|---|---|
| Beam index a (k bits) | |
| Beam index b (k bits) | |
| Beam index c (k bits) | Time resource index α (n bits) |
| . . . | |
| Beam index j (k bits) | |

$L_{max}$

$T_{max} = 1$

**(a)**

| k bits | k bits | k bits | · · · | k bits | n bits |
|---|---|---|---|---|---|
| Beam index a | Beam index b | Beam index c | · · · | Beam index j | Time resource index α |

**(b)**

EP 4 668 982 A1

FIG. 13

| Beam indication field | Time resource field |
|---|---|
| Beam index a (k bits) | Time resource index α (m bits) |
| Beam index b (k bits) | Time resource index β (m bits) |
| Beam index c (k bits) | Time resource index γ (m bits) |
| . . . | . . . |
| Beam index j (k bits) | Time resource index ξ (m bits) |

$L_{max}$ | $T_{max} = L_{max}$

(a)

| k bits | k bits | k bits | · · · | k bits | m bits | m bits | m bits | · · · | m bits |
|---|---|---|---|---|---|---|---|---|---|
| Beam index a | Beam index b | Beam index c | · · · | Beam index j | Time resource index α | Time resource index β | Time resource index γ | | Time resource index ξ |

(b)

| k bits | m bits | k bits | m bits | k bits | m bits | · · · | · · · | k bits | m bits |
|---|---|---|---|---|---|---|---|---|---|
| Beam index a | Time resource index α | Beam index b | Time resource index β | Beam index c | Time resource index γ | · · · | | Beam index j | Time resource index ξ |

(c)

EP 4 668 982 A1

# FIG. 14

| p bits | k bits | k bits | $\cdots$ | k bits | m bits | m bits | $\cdots$ | m bits |
|---|---|---|---|---|---|---|---|---|
| Validity indication | Beam index a | Beam index b | $\cdots$ | Beam index j | Time resource index α | Time resource index β | $\cdots$ | Time resource index ξ |

(a)

| p bits | k bits | m bits | k bits | m bits | $\cdots$ | $\cdots$ | k bits | m bits |
|---|---|---|---|---|---|---|---|---|
| Validity indication | Beam index a | Time resource index α | Beam index b | Time resource index β | $\cdots$ | | Beam index j | Time resource index ξ |

(b)

| p bits | k bits | k bits | k bits | $\cdots$ | k bits | n bits |
|---|---|---|---|---|---|---|
| Validity indication | Beam index a | Beam index b | Beam index c | $\cdots$ | Beam index j | Time resource index α |

(c)

EP 4 668 982 A1

# FIG. 15

S1501

Receive DCI including validity field, multiple beam indication fields, and multiple time resource fields for configuring beam of access link

S1503

Identify valid first time resource fields among multiple time resource fields based on validity field

S1505

Determine beam of access link based on valid beam indication fields corresponding to first time resource fields

# FIG. 16

S1601

Transmit configuration information including parameters related to beam configuration for access link to device

S1603

Transmit DCI including validity field, multiple beam indication fields, and multiple time resource fields for configuring beam for access link based on configuration information

# FIG. 17

# FIG. 18

# FIG. 19

Device(100, 200)

| | |
|---|---|
| Communication unit (110)<br>(e.g., 5G communication unit) | Control unit (120)<br>(e.g., processor(s)) |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

## INTERNATIONAL SEARCH REPORT

| International application No. |
|---|
| **PCT/KR2024/002103** |

**A.  CLASSIFICATION OF SUBJECT MATTER**

**H04W 72/232**(2023.01)i; **H04B 7/06**(2006.01)i; **H04B 7/155**(2006.01)i; **H04W 72/04**(2009.01)i; **H04L 27/26**(2006.01)i; **H04W 84/04**(2009.01)i; **H04W 16/28**(2009.01)i

According to International Patent Classification (IPC) or to both national classification and IPC

**B.  FIELDS SEARCHED**

Minimum documentation searched (classification system followed by classification symbols)

H04W 72/232(2023.01); H04L 5/00(2006.01); H04W 16/26(2009.01); H04W 16/28(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: control link, access link, NCR, time resource, beam indication, validity field, DCI, off, RRC, bit, MAC-CE

**C.  DOCUMENTS CONSIDERED TO BE RELEVANT**

| Category* | Citation of document, with indication, where appropriate, of the relevant passages | Relevant to claim No. |
|---|---|---|
| Y | ZTE. Discussion on side control information. R1-2211107, 3GPP TSG RAN WG1 #111. Toulouse, France. 07 November 2022.<br>See sections 2.1.1-4.2. | 1-15 |
| Y | CN 113890702 A (DATANG MOBILE COMMUNICATIONS EQUIPMENT CO., LTD.) 04 January 2022 (2022-01-04)<br>See paragraph [0290]; and claims 1, 10 and 16. | 1-15 |
| A | ERICSSON. Side-control information and NCR behaviour. R1-2212344, 3GPP TSG-RAN WG1 Meeting #111. Toulouse, France. 07 November 2022.<br>See sections 2.1-2.4. | 1-15 |
| A | HUAWEI et al. Side control information and behaviors for network-controlled repeaters. R1-2210882, 3GPP TSG-RAN WG1 Meeting #111. Toulouse, France. 07 November 2022.<br>See sections 2.2-2.2.4. | 1-15 |
| A | CN 115606221 A (BEIJING XIAOMI MOBILE SOFTWARE CO., LTD.) 13 January 2023 (2023-01-13)<br>See claims 1-25. | 1-15 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **13 June 2024** | **14 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2024/002103**

| Patent document cited in search report | | | Publication date (day/month/year) | Patent family member(s) | | | Publication date (day/month/year) |
|---|---|---|---|---|---|---|---|
| CN | 113890702 | A | 04 January 2022 | CN | 113890702 | B | 12 May 2023 |
| | | | | EP | 4178292 | A1 | 10 May 2023 |
| | | | | EP | 4178292 | A4 | 20 December 2023 |
| | | | | US | 2023-0261724 | A1 | 17 August 2023 |
| | | | | WO | 2022-002201 | A1 | 06 January 2022 |
| CN | 115606221 | A | 13 January 2023 | WO | 2024-000193 | A1 | 04 January 2024 |

Form PCT/ISA/210 (patent family annex) (July 2022)